(19) Europäisches Patentamt
European Patent Office
Office européen des brevets

(11) EP 3 312 227 B1

(12) EUROPEAN PATENT SPECIFICATION

(45) Date of publication and mention of the grant of the patent:
**04.10.2023 Bulletin 2023/40**

(21) Application number: **15895677.1**

(22) Date of filing: **19.06.2015**

(51) International Patent Classification (IPC):
***C08L 1/12*** *(2006.01)* ***C08L 29/04*** *(2006.01)*

(52) Cooperative Patent Classification (CPC):
(C-Sets available)
**C08L 1/12; C08B 3/06; C08H 8/00; C08J 5/18; C08L 29/04; C09D 129/04;** C08J 2301/12 (Cont.)

(86) International application number:
**PCT/JP2015/067796**

(87) International publication number:
**WO 2016/203657 (22.12.2016 Gazette 2016/51)**

(54) **WATER-SOLUBLE CELLULOSE ACETATE RESIN COMPOSITION, COATED PREPARATION, WATER-SOLUBLE CELLULOSE ACETATE COMPOSITE MOLDED ARTICLE AND METHOD FOR PRODUCING SAME**

WASSERLÖSLICHE CELLULOSEACETAT-HARZZUSAMMENSETZUNG, BESCHICHTETE ZUBEREITUNG, ZUSAMMENGESETZTER FORMARTIKEL AUS WASSERLÖSLICHEM CELLULOSEACETAT UND HERSTELLUNGSVERFAHREN DAFÜR

COMPOSITION DE RÉSINE D'ACÉTATE DE CELLULOSE SOLUBLE DANS L'EAU, PRÉPARATION ENDUITE, ARTICLE MOULÉ À BASE DE COMPOSITE D'ACÉTATE DE CELLULOSE SOLUBLE DANS L'EAU ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.04.2018 Bulletin 2018/17**

(73) Proprietor: **Daicel Corporation**
**Osaka-shi, Osaka 530-0011 (JP)**

(72) Inventors:
- **MORI, Masahiro**
  **Kyoto-shi, Kyoto 606-8501 (JP)**
- **SUGIMURA, Kazuki**
  **Kyoto-shi, Kyoto 606-8501 (JP)**
- **NISHIO, Yoshiyuki**
  **Kyoto-shi, Kyoto 606-8501 (JP)**
- **NAKAMURA, Toshikazu**
  **Hyogo 671-1283 (JP)**
- **SHIMAMOTO, Shu**
  **Tokyo 108-8230 (JP)**

(74) Representative: **Grünecker Patent- und Rechtsanwälte**
**PartG mbB**
**Leopoldstraße 4**
**80802 München (DE)**

(56) References cited:
**WO-A1-2014/142166**
**JP-A- H0 776 632**
**JP-A- S5 834 801**
**JP-A- H10 317 228**
**JP-A- H11 255 959**
**JP-A- 2001 064 440**
**JP-A- 2006 335 842**
**JP-A- 2011 132 448**
**JP-A- 2014 520 945**

- **THOMAS A. WHEATLEY: 'Water Soluble Cellulose Acetate: A Versatile Polymer for Film Coating, Drug Development and Industrial Pharmacy' DRUG DEVELOPMENT AND INDUSTRIAL PHARMACY, vol. 33, 2007, pages 281 - 290, XP055287369**
- **SHU SHIMAMOTO ET AL.: 'Characteristics and Potential Utilization of Cellulose Acetates in Light of 'Interaction' CELLULOSE COMMUN. vol. 20, no. 4, 2013, pages 193 - 198, XP009504652**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **SHU SHIMAMOTO ET AL.: 'Characteristics and Potential Applications of Cellulose Acetate' JAPAN TAPPI JOURNAL vol. 68, no. 9, 2014, pages 58 - 64, XP009504665**


(52) Cooperative Patent Classification (CPC): (Cont.)

C-Sets
**C08L 1/12, C08L 29/04;**
**C08L 29/04, C08L 1/12;**
**C09D 129/04, C08L 1/12**

## Description

Technical Field

The present invention relates to a water-soluble cellulose acetate resin composition, a coated preparation coated with a coating layer comprising the resin composition, a water-soluble cellulose acetate composite molded article formed of the resin composition, and a production method thereof. The water-soluble cellulose acetate resin composition is useful as e.g., a component of a coating film for medical drugs and foods. The water-soluble cellulose acetate resin composition is also useful for producing water-soluble and biodegradable resin molded articles, for example, tobacco filters soluble in water and biologically degraded.

Background Art

To protect foods and medical drugs from external factors such as oxidation, moisturization, light, abrasion and impact, so called coated preparations prepared by coating e.g., a solid medicinal agent, a tablet, a granule with a coating layer, are widely employed. The base component for such a coating layer must have properties such as safety, water solubility, transparency and durability. Usually, a water-soluble polymer such as hydroxypropylmethylcellulose, low substituted hydroxypropylcellulose and hydroxypropylcellulose and polyvinylpyrrolidone are widely used as the base component. However, these water-soluble polymers have a problem in that stability at high temperature and high humidity is low and preparations deteriorate depending on storage conditions. Patent Literature 1 discloses that a preparation coated with a film containing a water-soluble cellulose acetate is excellent in stability in high temperature and high humidity conditions. However, the film containing a water-soluble cellulose acetate has a problem in that water vapor permeability is high and thus components of a preparation are easily moisturized.

In contrast, cellulose acetate has extremely low flowability in a molten state and thus a large amount of plasticizer had to be added in thermoforming. In particular, yarn ejected from a thin spinning nozzle by melt spinning technology, is insufficient in melt tension. For the reason, melt spinning of a cellulose acetate yarn has not been industrially made. Because of this, to obtain a cellulose acetate fiber, the following method had to be employed: cellulose acetate is first dissolved in a good solvent such as acetone and methylene chloride, which is selected in accordance with the degree of substitution thereof, and then, subjected to dry spinning. Particularly, as to cellulose acetate with a low degree of substitution, a good solvent suitable for use in dry spinning and having a low vapor pressure and a low boiling point was not found. For the reason, it was impossible to industrially produce a fiber of cellulose acetate with a low degree of substitution by dry spinning.

A technique, in which cellulose acetate is mixed with another synthetic polymer to obtain a polymer blend or a polymer alloy and then subjected to melt spinning, has been proposed. For example, Patent Literature 2 discloses a method for obtaining a biodegradable cellulose acetate fiber by melt spinning of a complex of cellulose acetate (acetylation degree: 30 to 56%, average degree of polymerization: 70 to 140) and caprolactone tetraol (average molecular weight: 500 to 1000). However, this fiber is not dissolved in water. In addition, a spinning process is carried out at a high temperature exceeding 200°C, the fiber tends to be colored.

Patent Literature 3 and Patent Literature 4 disclose a method of obtaining a fiber by subjecting an aqueous solution of a water-soluble cellulose acetate to dry spinning. However, dry air of 380 to 400°C is required for dry spinning, and thus, a large amount of energy is needed. In addition, in this method, a thin fiber lower than 10 denier is not obtained.
Patent Literature 5 relates to an aqueous dispersion, which comprises an acetyl cellulose-based biodegradable resin dispersed in water and stabilized.
Patent Literature 6 relates to a low-substituted cellulose acetate.
Patent Literature 7 describes a molded article obtained from a composition comprising a cellulose derivative and a vinyl alcohol-based resin.
Patent Literature 8 relates to a composition comprising a blend of cellulose acetate and a water-soluble polymer.

Citation List

Patent Literature

Patent Literature 1: U.S. Patent No. 5,206,030
Patent Literature 2: Japanese Patent Laid-Open No. 10-317228
Patent Literature 3: Japanese Patent Laid-Open No. 7-268724
Patent Literature 4: Japanese Patent Publication No. 1-13481

Patent Literature 5: JP 2001-064440 A
Patent Literature 6: WO 2014/142166 A1
Patent Literature 7: JP 2011-132448 A
Patent Literature 8: JP 2014-520945 A

## Summary of Invention

### Technical Problem

An object of the present invention is to provide a water-soluble cellulose acetate resin composition from which a transparent film having low oxygen permeability and water vapor permeability can be produced.

Another object of the present invention is to provide a water-soluble cellulose acetate resin composition from which a water-soluble and biodegradable cellulose acetate resin molded article can be produced in a molten state.

Another object of the present invention is to provide a water-soluble cellulose acetate resin composition from which a water-soluble and biodegradable cellulose acetate fiber having relatively low fineness and less colored can be obtained in a molten state.

Another object of the present invention is to provide a water-soluble cellulose acetate composite molded article formed from the water-soluble cellulose acetate resin composition.

Another object of the present invention is to provide a coated preparation having a coating layer containing the water-soluble cellulose acetate resin composition.

Another object of the present invention is to provide a method for industrially efficiently producing the water-soluble cellulose acetate composite molded article or the coated preparation.

### Solution to Problem

The present inventors conducted intensive studies with a view to attain the aforementioned objects. As a result, they have found that cellulose acetate having a predetermined total degree of acetyl substitution and a polyvinyl alcohol having a predetermined degree of saponification is compatible with each other to reduce the glass transition temperature, forming a transparent resin composition; and that a film containing the resin composition exhibits low oxygen permeability and water vapor permeability, has an excellent function of protecting an active ingredient from oxidation and humidity, and is extremely suitable as a base component for a coating layer of a coated preparation.

The present inventors further have found that if a resin composition comprising cellulose acetate having a total degree of acetyl substitution of 0.5 to 1.0 and a water-soluble organic additive (except polyvinyl alcohol) is used as a molded article material, the glass transition temperature can be decreased (preferably, sufficiently lower than 200°C); molding can be made at a relatively low temperature in a molten state; the molding thus obtained has water solubility and biodegradability; and a fiber having a relatively low fineness and less colored can be simply produced in accordance with the molding method as mentioned above. The present invention was accomplished based on these findings and additional studies further conducted.

The subject matter of the invention is as set out in the appended claims.
The present invention provides a water-soluble cellulose acetate resin composition comprising cellulose acetate (A1) having a total degree of acetyl substitution of 0.4 to 1.6 and polyvinyl alcohol (B) having a degree of saponification of not less than 50 mol%.

In the water-soluble cellulose acetate resin composition, the total degree of acetyl substitution of cellulose acetate (A1) may be 0.6 to 0.9.

In the water-soluble cellulose acetate resin composition, the degree of saponification of polyvinyl alcohol (B) may be not less than 90 mol%.

In the water-soluble cellulose acetate resin composition, the ratio of polyvinyl alcohol (B) with respect to 100 parts by weight of cellulose acetate (A1) may be not more than 500 parts by weight.

In the water-soluble cellulose acetate resin composition, cellulose acetate (A1) may be a cellulose acetate having a compositional distribution index (CDI) of not more than 2.0

CDI = (Measured value of the half height width of chemical composition) / (Theoretical value of the half height width of chemical composition)

Measured value of the half height width of chemical composition: the half height width of chemical composition determined by the HPLC analysis of cellulose acetate propionate obtained by propionylating all residual hydroxy groups in cellulose acetate (sample),

[Expression 1]

$$\text{Theoretical value of the half height width of compositional distribution} = 2.35482\sqrt{3*DPw*(DS/3)*(1-DS/3)}/DPw$$

DS: the total degree of acetyl substitution, and
DPw: the weight-average degree of polymerization (value determined by the GPC-light scattering method using cellulose acetate propionate obtained by propionylating all residual hydroxy groups in cellulose acetate (sample)).

The present invention also provides a water-soluble cellulose acetate composite molded article formed from the water-soluble cellulose acetate resin composition.
The water-soluble cellulose acetate composite molded article may be like a film.
The water-soluble cellulose acetate composite molded article may be like a fiber.
The present invention also provides a coated preparation having a coating layer containing the water-soluble cellulose acetate resin composition.
The present invention also provides a method for producing a water-soluble cellulose acetate composite molded article, comprising molding the water-soluble cellulose acetate resin composition via a molten state.
The present invention further provides a method for producing a water-soluble cellulose acetate composite molded article, comprising molding the water-soluble cellulose acetate resin composition via a solution.
In the method for producing a water-soluble cellulose acetate composite molded article, the water-soluble cellulose acetate composite molded article may be the coating layer of a coated preparation.

Advantageous Effects of Invention

According to a first embodiment of the water-soluble cellulose acetate resin composition of the present invention, the water-soluble cellulose acetate resin molded article containing cellulose acetate having a predetermined total degree of acetyl substitution and a polyvinyl alcohol having a predetermined degree of saponification has a low glass transition temperature since both components are compatible with each other to form a transparent resin composition. The film containing the resin composition exhibits low oxygen permeability and water vapor permeability, has an excellent function of protecting an active ingredient from oxidation and humidity, and is extremely suitable as a component of a base for the coating layer of a coated preparation.
According to a second embodiment of the water-soluble cellulose acetate resin composition of the present invention, the water-soluble and biodegradable cellulose acetate resin molded article can be produced via a molten state. In particular, a water-soluble and biodegradable cellulose acetate fiber having relatively low fineness (for example, approximately 2 denier, which is the same fineness as in conventional tobacco filters) and less colored can be produced.
According to the method for producing the water-soluble cellulose acetate composite molded article of the present invention, a water-soluble and biodegradable cellulose acetate resin molded article, in particular, a water-soluble and biodegradable cellulose acetate fiber having relatively low fineness and less colored can be industrially efficiently produced. In addition, since molding can be made via a molten state, it is not necessary to use dry air of approximately 400°C as in dry spinning and energy can be saved.

Brief Description of Drawings

[Figure 1] Figure 1 is a schematic view showing a chart pattern (pattern 1) obtained by subjecting blends each containing two types of polymers (polymer A and polymer B) in a different ratio to differential scanning calorimetry (DSC) and determining that polymer A and polymer B are compatible with each other.
[Figure 2] Figure 2 is a schematic view showing a chart pattern (pattern 2) obtained by subjecting blends each

containing two types of polymers (polymer A and polymer B) in a different ratio to differential scanning calorimetry (DSC) and determining that polymer A and polymer B are incompatible with each other.

[Figure 3] Figure 3 is a schematic view showing a chart pattern (pattern 3) obtained by subjecting blends each containing two types of polymers (polymer A and polymer B) in a different ratio to differential scanning calorimetry (DSC) and determining that polymer A and polymer B are compatible with each other.

[Figure 4] Figure 4 is a schematic view showing a chart pattern (pattern 4) obtained by subjecting blends each containing two types of polymers (polymer A and polymer B) in a different ratio to differential scanning calorimetry (DSC) and determining that polymer A and polymer B are incompatible with each other.

Description of Embodiments

The water-soluble cellulose acetate resin composition of the present invention, contains cellulose acetate (A1) having a total degree of acetyl substitution of 0.4 to 1.6 and polyvinyl alcohol (B) having a degree of saponification of not less than 50 mol%.

[Cellulose acetate]

(Total degree of acetyl substitution)

The cellulose acetate has a total degree of acetyl substitution (average degree of substitution) of 0.4 to 1.6. If the total degree of acetyl substitution falls within the range, the solubility to water is excellent and cellulose acetate (A1) and polyvinyl alcohol (B) are compatible with each other to easily form a transparent resin composition; whereas, if the total degree of acetyl substitution is outside the range, the solubility to water tends to decrease. The lower limit of the total degree of acetyl substitution is preferably not less than 0.45, more preferably not less than 0.5, further preferably not less than 0.55 and particularly preferably not less than 0.6. In contrast, the upper limit of the total degree of acetyl substitution is preferably not more than 1.5, more preferably not more than 1.4, further preferably not more than 1.3, further more preferably not more than 1.2, still further more preferably not more than 1.1, particularly preferably not more than 1.0 and particularly more preferably not more than 0.9.

The total degree of acetyl substitution can be measured by a known titration method of dissolving cellulose acetate in water and determining the degree of substitution of the cellulose acetate. Alternatively, the total degree of acetyl substitution may be measured through NMR by propionylating the hydroxy groups of cellulose acetate (see a method mentioned later) and then dissolving the resulting sample in deuterated chloroform.

The total degree of acetyl substitution is determined through conversion according to the expression given below from the degree of acetylation determined in accordance with the method for measuring the degree of acetylation prescribed in ASTM: D-817-91 (Testing methods for cellulose acetate, etc.). This is the most general way to determine the degree of substitution of cellulose acetate.

$$DS = 162.14 \times AV \times 0.01 / (60.052 - 42.037 \times AV \times 0.01)$$

DS: the total degree of acetyl substitution

AV: the degree of acetylation (%)

First, 500 mg of dried cellulose acetate (sample) is precisely weighed and dissolved in 50 ml of a mixed solvent of ultrapure water and acetone (volume ratio: 4:1), and 50 ml of a 0.2 N aqueous sodium hydroxide solution is then added thereto, followed by saponification at 25°C for 2 hours. Next, 50 ml of 0.2 N hydrochloric acid is added thereto, and the amount of eliminated acetic acid is titrated against a 0.2 N aqueous sodium hydroxide solution (0.2 N sodium hydroxide normal solution) with phenolphthalein as an indicator. In addition, a blank test (test without the use of the sample) is conducted by a similar method. Then, AV (degree of acetylation) (%) is calculated according to the following expression:

$$AV (\%) = (A - B) \times F \times 1.201 / \text{Sample weight (g)}$$

A: the titer (ml) of the 0.2 N sodium hydroxide normal solution

B: the titer (ml) of the 0.2 N sodium hydroxide normal solution in the blank test

F: the factor of the 0.2 N sodium hydroxide normal solution

(Compositional distribution index (CDI))

In the present invention, the compositional distribution (intermolecular substitution degree distribution) of the cellulose acetate (A1) is not particularly limited, and the compositional distribution index (CDI) is, for example, 1.0 to 3.0. The compositional distribution index (CDI) is preferably 1.0 to 2.0, more preferably 1.0 to 1.8, further preferably 1.0 to 1.6, particularly preferably 1.0 to 1.5. If the compositional distribution index (CDI) is not more than 2.0, compatibility between cellulose acetate (A1) and polyvinyl alcohol (B) is improved. Probably due to this, strength of a molded article (strength of yarn in the case of fibers) greatly improved.
The lower limit of the compositional distribution index (CDI) is 0. This value can be realized in such a way (specific synthesis technique) that only the 6-position of a glucose residue is acetylated with a selectivity of e.g., 100% and the other positions are not acetylated; however, such synthesis technique is not known. On the assumption that all hydroxy groups of a glucose residue are acetylated or deacetylated with the same probability, CDI becomes 1.0; however, in an actual reaction of cellulose, considerable contrivances are required to set the reaction condition close to such an ideal condition. The smaller the compositional distribution index (CDI), the more uniform the compositional distribution (distribution of intermolecular substitution degree) becomes. If the compositional distribution is uniform, solubility to water can be ensured within a wider range of a total degree of acetyl substitution than usual. As a result, homogeneous dissolution can be obtained, and structural viscosity is not expressed. Because of this, when cellulose acetate is used as a base for a coating layer of a coated preparation, it can be advantageously and easily taken in.
In this context, the compositional distribution index (CDI) is defined by the ratio of the measured value of the half height width of chemical composition to the theoretical value of the half height width of chemical composition [(Measured value of the half height width of chemical composition) / (Theoretical value of the half height width of chemical composition)]. The half height width of chemical composition is also called "half height width of intermolecular substitution degree distribution" or simply called "half height width of substitution degree distribution".
The magnification of the half height width of the maximum peak in an intermolecular substitution degree distribution curve of cellulose acetate can be used as an index for evaluating the uniformity of the total degree of acetyl substitution of cellulose acetate. The half height width refers to a width of a chart at a height half the peak height in the chart, when the chart is plotted with the abscissa (X-axis) depicting the degree of acetyl substitution and the ordinate (Y-axis) depicting an abundance at this degree of substitution, and serves as an index that indicates how the distribution disperses. The half height width of substitution degree distribution can be determined by high-performance liquid chromatography (HPLC) analysis. A method for converting the abscissa (elution time) of an HPLC elution curve of a cellulose ester into the degree of substitution (0 to 3) is described in Japanese Patent Laid-Open No. 2003-201301 (paragraphs [0037] to [0040]).

(Theoretical value of half height width of chemical composition)

The theoretical value of the half height width of chemical composition (half height width of substitution degree distribution) can be probabilistically calculated. Specifically, the theoretical value of the half height width of chemical composition is determined according to the following expression (1):
[Expression 2]

$$\text{Theoretical value of the half height width of compositional distribution} = 2.35482\sqrt{mpq}/DPw \quad \cdots (1)$$

m: the total number of hydroxy and acetyl groups in one molecule of cellulose acetate
p: the probability that hydroxy groups in one molecule of cellulose acetate are acetyl-substituted

$$q = 1 - p$$

DPw: the weight-average degree of polymerization (determined by the GPC-light scattering method)

The method for measuring the weight-average degree of polymerization (DPw) will be mentioned later.
Expression (1) represents the half height width of chemical composition is naturally obtained in the case where

all hydroxy groups of cellulose are acetylated and deacetylated with the same probability and induced in accordance with so-called the binomial theorem. The theoretical value of the half height width of chemical composition, when represented using the degree of substitution and the degree of polymerization, is represented as described below. In the present invention, the following expression (2) is used as a definitional equation to determine the theoretical value of the half height width of chemical composition:
[Expression 3]

$$\text{Theoretical value of the half height width of compositional distribution} = 2.35482\sqrt{3*DPw*(DS/3)*(1-DS/3)}/DPw \quad \cdots (2)$$

DS: the total degree of acetyl substitution
DPw: the weight-average degree of polymerization (determined by the GPC-light scattering method)

The method for measuring the weight-average degree of polymerization (DPw) will be mentioned later.

To describe more strictly with respect to Expression (1) and Expression (2), polymerization degree distribution should be taken into consideration. In this case, "DPw" in Expression (1) and Expression (2) is replaced with a polymerization degree distribution function and the whole expression (function) should be integrated from 0 (degree of polymerization) to infinity. However, as long as DPw is used, a theoretical value having an approximately sufficient accuracy can be obtained by Expression (1) and Expression (2). If DPn (number average polymerization degree) is used, the effect of polymerization degree distribution is ignorable. For the reason, DPw should be used.

(Measured value of half height width of chemical composition)

In the present invention, the measured value of the half height width of chemical composition refers to the half height width of chemical composition determined by the HPLC analysis of cellulose acetate propionate obtained by propionylating all residual hydroxy groups (unsubstituted hydroxy groups) in cellulose acetate (sample).

In general, cellulose acetate having a total degree of acetyl substitution of 2 to 3 can be subjected without pretreatment to high-performance liquid chromatography (HPLC) analysis, whereby the half height width of chemical composition can be determined. For example, a compositional distribution analysis method for cellulose acetate having a degree of substitution of 2.27 to 2.56 is described in Japanese Patent Laid-Open No. 2011-158664.

On the other hand, in the present invention, the measured value of the half height width of chemical composition (half height width of substitution degree distribution) is determined by HPLC analysis after derivatization of the intramolecular residual hydroxy groups of cellulose acetate as pretreatment for the HPLC analysis. The purpose of this pretreatment is to enable HPLC analysis by converting cellulose acetate with a low degree of substitution into a derivative readily soluble in an organic solvent. Specifically, the intramolecular residual hydroxy groups are fully propionylated, and the fully derivatized cellulose acetate propionate (CAP) is subjected to HPLC analysis to determine the half height width of chemical composition (measured value). In this context, the derivatization must be fully completed so that the residual hydroxy groups are absent in the molecule whereas only acetyl and propionyl groups are present therein. Specifically, the sum of the degree of acetyl substitution (DSac) and the degree of propionyl substitution (DSpr) is 3. This is because the relational expression: DSac + DSpr = 3 is used in order to prepare a calibration curve for converting the abscissa (elution time) of an HPLC elution curve of CAP into the degree of acetyl substitution (0 to 3).

The full derivatization of cellulose acetate can be carried out by the action of propionic anhydride with N,N-dimethylaminopyridine as a catalyst in a pyridine/N,N-dimethylacetamide mixed solvent. More specifically, the propionylation is carried out under conditions involving a temperature of 100°C and a reaction time of 1.5 to 3.0 hours using 20 parts by weight of a mixed solvent [pyridine/N,N-dimethylacetamide = 1/1 (v/v)] as a solvent with respect to the cellulose acetate (sample), 6.0 to 7.5 equivalents of propionic anhydride as a propionylating agent with respect to the hydroxy groups of the cellulose acetate, and 6.5 to 8.0 mol% of N,N-dimethylaminopyridine as a catalyst with respect to the hydroxy groups of the cellulose acetate. After the reaction, fully derivatized cellulose acetate propionate is obtained by precipitation using methanol as a precipitation solvent. More specifically, for example, precipitation was caused by adding 1 part by weight of the reaction mixture to 10 parts by weight of methanol at room temperature, and the obtained precipitates can be washed five times with methanol and vacuum dried at 60°C for 3 hours to obtain fully derivatized cellulose acetate propionate (CAP). Polydispersity (Mw/Mn) and the weight-average degree of polymerization (DPw) mentioned later are also measured using the fully derivatized cellulose acetate propionate (CAP) converted from the cellulose acetate (sample) according to this method.

In the HPLC analysis mentioned above, the half height width of chemical composition(measured value) of

cellulose acetate (sample) can be determined by: using a plurality of cellulose acetate propionates differing in the degree of acetyl substitution as standard samples to conduct HPLC analysis in a predetermined measurement apparatus under predetermined measurement conditions; and preparing a calibration curve [curve, usually, a cubic curve that indicates the relationship between the elution time of cellulose acetate propionate and the degree of acetyl substitution (0 to 3)] from the analysis values of these standard samples. One determined by the HPLC analysis is the relationship between the elution time and the acetyl substitution distribution of cellulose acetate propionate. This is the relationship between the elution time and the acetyl substitution distribution of a substance in which all intramolecular residual hydroxy groups in the sample have been converted to propionyloxy groups, and is therefore essentially to determine the acetyl substitution distribution of the cellulose acetate of the present invention.

The conditions of the HPLC analysis are as follows:

Apparatus: Agilent 1100 Series
Column: Waters Nova-Pak phenyl 60Å 4 μm (150 mm × 3.9 mmΦ) + guard column
Column temperature: 30°C
Detection: Varian 380-LC
Injection volume: 5.0 μL (sample concentration: 0.1% (wt/vol))

Eluent: solution A: $MeOH/H_2O$ = 8/1 (v/v), solution B: $CHCl_3/MeOH$ = 8/1 (v/v)

Gradient: A/B = 80/20 → 0/100 (28 min); Flow rate: 0.7 mL/min

In relation to the maximum peak (E) corresponding to the average degree of substitution found in the substitution degree distribution curve [substitution degree distribution curve of cellulose acetate propionate plotted with the ordinate depicting the abundance of cellulose acetate propionate and the abscissa depicting the degree of acetyl substitution] (also referred to as an "intermolecular substitution degree distribution curve") determined from the calibration curve, the half height width of substitution degree distribution is determined as follows: a base line (A-B) tangent to the base point (A) at the lower degree of substitution and to the base point (B) at the higher degree of substitution of the peak (E) is drawn, and a line perpendicular to the abscissa is drawn from the maximum peak (E) with respect to this base line. The intersection (C) between the perpendicular line and the base line (A-B) is determined to determine the midpoint (D) between the maximum peak (E) and the intersection (C). A line parallel to the base line (A-B) is drawn through the midpoint (D) to determine two intersections (A', B') with the intermolecular substitution degree distribution curve. From each of these two intersections (A', B'), a line perpendicular to the abscissa is drawn, and the width between the two intersections on the abscissa is defined as the half height width of the maximum peak (i.e., the half height width of substitution degree distribution).

Such a half height width of substitution degree distribution reflects that the chains of cellulose acetate propionate molecules in a sample differ in retention time depending on the degree of acetylation of hydroxyl groups on the glucose ring in each of the polymer chains constituting these molecules. Thus, ideally, the width of the retention time indicates the width of compositional distribution (in terms of the degree of substitution). However, HPLC has ducts (e.g., a guide column for protecting the column) that do not contribute to the partition. Hence, the width of the retention time that is not ascribable to the width of compositional distribution is often incorporated as an error due to the configuration of the measurement apparatus. This error is influenced by the length and inner diameter of the column, the length and routing from the column to a detector, etc., and differs depending on the configuration of the apparatus, as mentioned above. For these reasons, the half height width of substitution degree distribution of the cellulose acetate propionate can usually be determined as a corrected value Z according to the compensation formula given below. By use of such a compensation formula, a more accurate half height width of substitution degree distribution (measured value) can be determined as a (substantially) constant value even in different measurement apparatuses (and measurement conditions).

$$Z = (X^2 - Y^2)^{1/2}$$

wherein X represents the half height width of substitution degree distribution (uncorrected value) determined in a predetermined measurement apparatus under predetermined measurement conditions, and Y = (a - b) x/3 + b ($0 \leq x \leq 3$).

Herein, a represents an apparent half height width of substitution degree distribution of cellulose acetate having a total degree of substitution of 3 (actually, since the total degree of substitution is 3, substitution degree distribution is not present) and obtained by the same measuring device and measurement conditions as in X; and b represents an apparent half height width of substitution degree distribution of cellulose propionate having a total degree of substitution of 3 and obtained by the same measuring device and measurement conditions as in X. x represents the total degree of acetyl substitution ($0 \leq x \leq 3$) of the measurement sample.

The cellulose acetate (or cellulose propionate) having a total degree of substitution of 3 refers to a cellulose ester in which all hydroxyl groups of cellulose are esterified, and in fact (or ideally), is a cellulose ester having no half height width of substitution degree distribution (i.e., a half height width of substitution degree distribution of 0).

In the present invention, the measured value of the half height width of chemical composition (half height width of substitution degree distribution) of the cellulose acetate (A1) is preferably 0.12 to 0.34, more preferably 0.13 to 0.25.

The theoretical formula of the substitution degree distribution described above gives a probabilistically calculated value on the assumption that all acetylation and deacetylation reactions proceed independently and equally. Specifically, the calculated value abides by binomial distribution. Such an ideal situation never happens in reality. As long as special contrivances are not provided in such a way that the hydrolysis reaction of cellulose acetate becomes closer to an ideal random reaction; and/or that the composition is fractionated in the treatment after the reaction, the substitution degree distribution of a cellulose ester becomes much wider than that probabilistically determined by the binomial distribution.

One possible special contrivance to the reaction is, for example, to maintain the system under conditions where deacetylation and acetylation reactions are in equilibrium. This case, however, is not preferred because the decomposition of cellulose proceeds by an acid catalyst. Another special contrivance to the reaction is to adopt reaction conditions that slow down a deacetylation rate as to low substituted forms. However, such specific methods have heretofore been unknown. That is, a special contrivance to the reaction which controls the substitution degree distribution of a cellulose ester so as to abide by binomial distribution as in the theory of probability for the reaction has been unknown so far. In addition, various circumstances including an inhomogeneous acetylation process (cellulose acetylation step) and partial or transient occurrence of precipitates due to water added in stages in a ripening process (cellulose acetate hydrolysis step) act toward widening the substitution degree distribution compared with the binomial distribution, and it is practically impossible to achieve ideal conditions by circumventing these. This is similar to the fact that an ideal gas is just an ideal product and a real gas behaves in a somewhat different way therefrom.

The conventional synthesis and treatment of cellulose acetate with a low degree of substitution have rarely paid attention to such problems associated with substitution degree distribution and have not made the measurement, validation, or discussion of the substitution degree distribution. For example, the literature (Journal of the Society of Fiber Science and Technology, Japan, 42, p. 25 (1986)) states that the solubility of cellulose acetate with a low degree of substitution is determined depending on the distribution of acetyl groups to the 2-, 3-, and 6-positions of the glucose residues, and does not take compositional distribution into consideration.

According to the studies of the present inventors, as mentioned later, the substitution degree distribution of cellulose acetate can be controlled, surprisingly, by a contrivance to treatment conditions after the cellulose acetate hydrolysis step. The literatures (CiBment, L., and Rivibre, C., Bull. SOC. chim., (5) 1, 1075 (1934); Sookne, A. M., Rutherford, H. A., Mark, H., and Harris, M. J. Research Natl. Bur. Standards, 29, 123 (1942); and A. J. Rosenthal, B. B. White Ind. Eng. Chem., 1952, 44 (11), pp 2693-2696) have reported that fractionation depending on molecular weights and minor fractionation associated with the degree of substitution (chemical composition) occur in the precipitation fractionation of cellulose acetate having a degree of substitution of 2.3, though no previous reports show that pronounced fractionation can be achieved on the basis of the degree of substitution (chemical composition) as found by the present inventors. Furthermore, there has been no validation to confirm that the substitution degree distribution (chemical composition) of cellulose acetate with a low degree of substitution can be controlled by dissolution fractionation or precipitation fractionation.

Another contrivance found by the present inventors to narrow the substitution degree distribution is the hydrolysis reaction (ripening reaction) of cellulose acetate at a high temperature not less than 90°C (or more than 90°C). Although detailed analysis or discussion has not been made previously as to the degree of polymerization of a product obtained through high-temperature reaction, the decomposition of cellulose has been regarded as taking precedence in the reaction at a high temperature not less than 90°C. This idea is an assumption (stereotype) based only on discussion on viscosity. The present inventors have found that, for obtaining cellulose acetate with a low degree of substitution through the hydrolysis of cellulose acetate, reaction at a high temperature not less than 90°C (or more than 90°C) in a large amount of acetic acid, preferably in the presence of a strong acid such as sulfuric acid, does not reduce the degree of polymerization, whereas viscosity is reduced with decreases in CDI. Specifically, the present inventors have revealed that the reduction in viscosity associated with high-temperature reaction is not attributed to reduction in the degree of polymerization, but is based on reduction in structural viscosity caused by the narrowing of the substitution degree distribution. Upon hydrolysis of cellulose acetate under the conditions mentioned above, not only forward reaction but reverse reaction occurs; thus CDI of a product (cellulose acetate with a low degree of substitution) is a very small value

and its solubility in water is also remarkably improved. By contrast, upon hydrolysis of cellulose acetate under conditions where reverse reaction is less likely to occur, the substitution degree distribution is widened due to various factors; thus the contents of poorly water-soluble cellulose acetate having a total degree of acetyl substitution of less than 0.4 and cellulose acetate having a degree of acetyl substitution of more than 1.6 are increased, resulting in reduction in solubility in water as a whole.

(Standard deviation of degree of substitution at 2-, 3-, and 6-positions)

In the present invention, the respective degrees of acetyl substitution at the 2-, 3-, and 6-positions on the glucose ring of the cellulose acetate can be measured by NMR according to the method of Tezuka (Tezuka, Carbonydr. Res. 273, 83 (1995)). Specifically, free hydroxy groups of a cellulose acetate sample are propionylated with propionic anhydride in pyridine. The resulting sample is dissolved in deuterated chloroform, and $^{13}$C-NMR spectra are measured. Carbon signals of acetyl groups appear in the order from the 2-position, via the 3-position, to the 6-position from a higher magnetic field in a region from 169 ppm to 171 ppm, and carbonyl carbon signals of propionyl groups appear in the same order in a region from 172 ppm to 174 ppm. The respective degrees of acetyl substitution at the 2-, 3-, and 6-positions on the glucose ring of the original cellulose diacetate can be determined from the abundance ratios between acetyl and propionyl groups at the corresponding positions. Note that, the sum of the respective degrees of acetyl substitution at the 2-, 3- and 6-positions is a total degree of acetyl substitution. The total degree of acetyl substitution can be obtained by this manner. Note that, the total degree of acetyl substitution can be analyzed by not only $^{13}$C-NMR but also $^{1}$H-NMR.

The standard deviation σ of the degree of substitution at each of the 2-, 3-, and 6-positions is defined according to the following expression:

[Expression 4]

$$\sigma^2 = \frac{1}{n-1}\sum_{i=1}^{n}(x_i - \bar{x})^2$$

σ : standard deviation

n = 3

$x_i$ : $x_1$, the degree of substitution at the 2-position,

$x_2$, the degree of substitution at the 3-position, and

$x_3$, the degree of substitution at the 6-position

$\bar{x}$ : the total degree of acetyl substitution / 3

In the present invention, the standard deviation of the degree of acetyl substitution at each of the 2-, 3-, and 6-positions of the glucose ring of the cellulose acetate (A1) is preferably not more than 0.08 (0 to 0.08). Cellulose acetate having the standard deviation of not more than 0.08 has equal substitution among the 2-, 3-, and 6-positions of the glucose ring and is excellent in solubility in water.

(Polydispersity (dispersity, Mw/Mn))

In the present invention, polydispersity (Mw/Mn) of molecular weight distribution (polymerization degree distribution) is obtained as a value determined by the GPC-light scattering method using cellulose acetate propionate, which is obtained by propionylating all residual hydroxy groups of cellulose acetate (sample).

The polydispersity (dispersity, Mw/Mn) of the cellulose acetate (A1) according to the present invention is preferably in the range of 1.2 to 2.5. Cellulose acetate having polydispersity Mw/Mn in the range mentioned above has a uniform molecular size and is excellent in solubility in water.

The number-average molecular weight (Mn), the weight-average molecular weight (Mw), and the polydispersity (Mw/Mn) of cellulose acetate can be determined by known methods using HPLC. In the present invention, the polydispersity (Mw/Mn) of cellulose acetate requires rendering the measurement sample soluble in an organic solvent and is thus determined similarly to the method for determining the measured value of the half height width of chemical composition, by converting cellulose acetate (sample) to fully derivatized cellulose acetate propionate (CAP) and then conducting size exclusion chromatography analysis under the following conditions (GPC-light scattering method):

Apparatus: Shodex GPC "SYSTEM-21H" manufactured by Showa Denko K.K.
Solvent: acetone
Column: Two GMHxl columns (Tosoh Corp.) with guard columns (manufactured by Tosoh Corp., TSKgel guardcolumn HXL-H)
Flow rate: 0.8 ml/min
Temperature: 29°C
Sample concentration: 0.25% (wt/vol)
Injection volume: 100 ul
Detection: MALLS (multi-angle laser light scattering) (manufactured by Wyatt Technology Corp., "DAWN-EOS")
Standard for MALLS correction: PMMA (molecular weight: 27600)

(Weight-average degree of polymerization (DPw))

In the present invention, the weight-average degree of polymerization (DPw) is a value determined by the GPC-light scattering method using cellulose acetate propionate obtained by propionylating all residual hydroxy groups in cellulose acetate (sample).

The weight-average degree of polymerization (DPw) of the cellulose acetate (A1) according to the present invention is preferably in the range of 50 to 800. If the weight-average degree of polymerization (DPw) is too high, filterability is more likely to be poor. The weight-average degree of polymerization (DPw) is preferably 55 to 700, more preferably 60 to 600.

The weight-average degree of polymerization (DPw), as with the polydispersity (Mw/Mn), is determined similarly to the method for determining the measured value of the half height width of chemical composition, by converting cellulose acetate (sample) to fully derivatized cellulose acetate propionate (CAP) and then conducting size exclusion chromatography analysis (GPC-light scattering method).

As mentioned above, the molecular weight (degree of polymerization) and the polydispersity (Mw/Mn) of water-soluble cellulose acetate is measured by the GPC-light scattering method (GPC-MALLS, GPC-LALLS, etc.). The detection of light scattering is generally difficult in an aqueous solvent. This is because the aqueous solvent generally contains large amounts of foreign substances and are easily contaminated secondarily even after temporary purification. Furthermore, in the aqueous solvent, the expansion of molecular chains may be unstable due to the influence of ion dissociative functional groups present in trace amounts. If a water-soluble inorganic salt (e.g., sodium chloride) is added in order to prevent this, a dissolved state becomes unstable and may yield associates in an aqueous solution. One effective method for overcoming this problem is to derivatize water-soluble cellulose acetate into a derivative soluble in an organic solvent, which contains only small amounts of foreign substances and are insusceptible to secondary contamination, and to carry out the GPC-light scattering measurement in the organic solvent. Propionylation is effective as the derivatization of water-soluble cellulose acetate for this purpose, and specific reaction conditions and treatment are as described in the description about the measured value of the half height width of chemical composition.

(6% Viscosity)

The 6% viscosity of the cellulose acetate (A1) according to the present invention is, for example, 5 to 500 mPa·s, preferably 6 to 300 mPa·s. If the 6% viscosity is too high, filterability may be poor.

The 6% viscosity of cellulose acetate can be measured by the following method:
A 50-ml volumetric flask is charged with 3.00 g of a dried sample, which is then dissolved by the addition of dissolved water. The resulting 6 wt/vol% solution is transferred to a predetermined Ostwald viscometer up to the marker line, and the temperature of the solution is regulated at 25 $\pm$ 1°C for approximately 15 minutes. The flow time of the solution through between the time-marker lines is measured, and the 6% viscosity is calculated according to the following expression:

6% Viscosity (mPa·s) = C $\times$ P $\times$ t
C: the constant of the sample solution
P: the density of the sample solution (0.997 g/cm$^3$)
t: the flow time of the sample solution (s)

The constant of the sample solution is determined by measuring the flow time of a standard solution for viscometer calibration [manufactured by Showa Shell Sekiyu K.K., trade name "JS-200" (in accordance with JIS Z 8809)] by the same procedures as above and calculating the constant of the sample solution according to the following expres-

sion:

$$\text{Constant of the sample solution} = \{\text{Absolute viscosity of the standard solution (mPa·s)}\} / \{\text{Density of the standard solution (g/cm}^3) \times \text{Flow time of the standard solution (s)}\}$$

(Production of cellulose acetate with a low degree of substitution)

The cellulose acetate (A1) (cellulose acetate with a low degree of substitution) according to the present invention can be produced by, for example, (A) a hydrolysis step (ripening step) for cellulose acetate having a middle or high degree of substitution, (B) a precipitation step, and optionally, (C) a washing and neutralization step.

[(A) Hydrolysis step (ripening step)]

In this step, cellulose acetate having a middle or high degree of substitution (hereinafter, also referred to as "raw material cellulose acetate") is hydrolyzed. The total degree of acetyl substitution of the cellulose acetate having a middle or high degree of substitution for use as a raw material is, for example, 1.5 to 3, preferably 2 to 3. Commercially available cellulose diacetate (total degree of acetyl substitution: 2.27 to 2.56) or cellulose triacetate (total degree of acetyl substitution: more than 2.56 to 3) can be used as the raw material cellulose acetate.

The hydrolysis reaction can be carried out by reacting the raw material cellulose acetate with water in the presence of a catalyst (hydrolysis catalyst) in an organic solvent. Examples of the organic solvent include acetic acid, acetone, and alcohols (methanol, etc.), and mixed solvents thereof. Among these, a solvent containing at least acetic acid is preferred. A catalyst generally used as a deacetylation catalyst can be used as the catalyst. The catalyst is particularly preferably sulfuric acid.

The amount of the organic solvent (e.g., acetic acid) used is, for example, 0.5 to 50 parts by weight, preferably 1 to 20 parts by weight, more preferably 3 to 10 parts by weight, with respect to 1 part by weight of the raw material cellulose acetate.

The amount of the catalyst (e.g., sulfuric acid) used is, for example, 0.005 to 1 parts by weight, preferably 0.01 to 0.5 parts by weight, more preferably 0.02 to 0.3 parts by weight, with respect to 1 part by weight of the raw material cellulose acetate. If the amount of the catalyst is too small, the molecular weight of cellulose acetate may be decreased due to too long a time for hydrolysis. On the other hand, if the amount of the catalyst is too large, the degree of change in depolymerization rate depending on the hydrolysis temperature is large so that the depolymerization rate is large even at a somewhat low hydrolysis temperature, making it difficult to obtain cellulose acetate having a moderately large molecular weight.

The amount of water in the hydrolysis step is, for example, 0.5 to 20 parts by weight, preferably 1 to 10 parts by weight, more preferably 2 to 7 parts by weight, with respect to 1 part by weight of the raw material cellulose acetate. Also, the amount of this water is, for example, 0.1 to 5 parts by weight, preferably 0.3 to 2 parts by weight, more preferably 0.5 to 1.5 parts by weight, with respect to 1 part by weight of the organic solvent (e.g., acetic acid). Although the whole amount of water may be present in the system at the start of the reaction, a portion of water used may be present in the system at the start of the reaction and the remaining portion may be added in one to several portions into the system in order to prevent the precipitation of cellulose acetate.

The reaction temperature in the hydrolysis step is, for example, 40 to 130°C, preferably 50 to 120°C, more preferably 60 to 110°C. Particularly, in the case of setting the reaction temperature to not less than 90°C (or beyond 90°C), equilibrium of reaction tends to change in the direction of proceeding a reverse reaction (acetylation reaction) rather than the forward reaction (hydrolysis reaction). As a result, substitution degree distribution is narrowed and cellulose acetate with a low degree of substitution having a very small compositional distribution index CDI can be obtained even if treatment conditions are not particularly changed. In this case, it is preferable that strong acid such as sulfuric acid is used as a catalyst and acetic acid is excessively used as a reaction solvent. Also, in the case of setting the reaction temperature to not more than 90°C, cellulose acetate with a low degree of substitution having a very small compositional distribution index CDI can be obtained, as mentioned later, by precipitation using a mixed solvent comprising not less than two solvents as a precipitation solvent in the precipitation step or by precipitation fractionation and/or dissolution fractionation.

[(B) Precipitation step]

In this step, after the completion of the hydrolysis reaction, the temperature of the reaction system is lowered to room temperature by cooling, and cellulose acetate with a low degree of substitution is precipitated by the addition of a precipitation solvent. An organic solvent miscible with water or an organic solvent having large solubility in water can be used as the precipitation solvent. Examples thereof include: ketones such as acetone and methyl ethyl ketone; alcohols such as methanol, ethanol, and isopropyl alcohol; esters such as ethyl acetate; nitrogen-containing compounds such as acetonitrile; ethers such as tetrahydrofuran; and mixed solvents thereof.

When a mixed solvent comprising not less than two solvents is used as the precipitation solvent, similar effects as in the precipitation fractionation mentioned later are produced so that cellulose acetate with a low degree of substitution having narrow compositional distribution (intermolecular substitution degree distribution) and a small compositional distribution index (CDI) can be obtained. Preferred examples of the mixed solvent include a mixed solvent of acetone and methanol, and a mixed solvent of isopropyl alcohol and methanol.

The cellulose acetate with a low degree of substitution obtained by the precipitation can be further subjected to precipitation fractionation (fractional precipitation) and/or dissolution fractionation (fractional dissolution) to thereby obtain cellulose acetate with a low degree of substitution having narrow compositional distribution (intermolecular substitution degree distribution) and a very small compositional distribution index CDI.

The precipitation fractionation can be carried out, for example, by: dissolving the cellulose acetate with a low degree of substitution (solid matter) obtained by the precipitation in water to prepare an aqueous solution having an appropriate concentration (e.g., 2 to 10% by weight, preferably 3 to 8% by weight); adding a poor solvent to this aqueous solution (or adding the aqueous solution to a poor solvent); keeping the mixture at an appropriate temperature (e.g., not more than 30°C, preferably not more than 20°C) to precipitate the cellulose acetate with a low degree of substitution; and recovering the precipitates. Examples of the poor solvent include: alcohols such as methanol; and ketones such as acetone. The amount of the poor solvent used is, for example, 1 to 10 parts by weight, preferably 2 to 7 parts by weight, with respect to 1 part by weight of the aqueous solution.

The dissolution fractionation can be carried out, for example, by: adding a mixed solvent of water and an organic solvent (e.g., a ketone such as acetone, or an alcohol such as ethanol) to the cellulose acetate with a low degree of substitution (solid matter) obtained by the precipitation or the cellulose acetate with a low degree of substitution (solid matter) obtained by the precipitation fractionation; stirring the mixture at an appropriate temperature (e.g., 20 to 80°C, preferably 25 to 60°C); then separating between a concentrate phase and a dilute phase by centrifugation; adding a precipitation solvent (e.g., a ketone such as acetone, or an alcohol such as methanol) to the dilute phase; and recovering the precipitates (solid matter). The concentration of the organic solvent in the mixed solvent of water and the organic solvent is, for example, 5 to 50% by weight, preferably 10 to 40% by weight.

[(C) Washing and neutralization step]

It is preferred that the precipitates (solid matter) obtained in the precipitation step (B) should be washed with an organic solvent (poor solvent), for example, an alcohol such as methanol, or a ketone such as acetone. It is also preferred that the precipitates should be washed and neutralized with an organic solvent (e.g., an alcohol such as methanol, or a ketone such as acetone) containing a basic substance. Note that, the neutralization step may be provided immediately after the hydrolysis step. In this case, a basic substance or an aqueous solution of a basic substance is preferably added to a hydrolysis reaction bath.

For example, an alkali metal compound (e.g., alkali metal hydroxides such as sodium hydroxide and potassium hydroxide; alkali metal carbonates such as sodium carbonate and potassium carbonate; alkali metal bicarbonates such as sodium bicarbonate; alkali metal carboxylates such as sodium acetate and potassium acetate; and sodium alkoxides such as sodium methoxide and sodium ethoxide) or an alkaline earth metal compound (e.g., alkaline earth metal hydroxides such as magnesium hydroxide and calcium hydroxide; alkaline earth metal carbonates such as magnesium carbonate and calcium carbonate; alkaline earth metal carboxylates such as magnesium acetate and calcium acetate; and alkaline earth metal alkoxides such as magnesium ethoxide) can be used as the basic substance. Among these, an alkali metal compound such as potassium acetate is particularly preferred.

Impurities such as the catalyst (sulfuric acid, etc.) used in the hydrolysis step can be efficiently removed by this washing and neutralization.

The cellulose acetate with a low degree of substitution thus obtained, if necessary, can be ground, sieved or granulated to obtain particles thereof adjusted within a predetermined particle size.

[Polyvinyl alcohol (B)]

As polyvinyl alcohol (B) according to the water-soluble cellulose acetate resin composition of the present

invention, a polyvinyl alcohol having a degree of saponification of not less than 50 mol% can be used without limitation. If the degree of saponification of polyvinyl alcohol (B) is not less than 50 mol%, the solubility thereof to water is excellent and cellulose acetate (A1) and polyvinyl alcohol (B) are le with each other to easily obtain a transparent resin composition. The lower limit of the degree of saponification is preferably not less than 60 mol%, more preferably not less than 70 mol%, further preferably not less than 75%, further more preferably not less than 80 mol%, still further preferable not less than 85 mol% and particularly preferably not less than 90 mol%. The upper limit of the degree of saponification, although it is not particularly limited, is preferably not more than 100 mol%, more preferably not more than 99 mol% and further preferably not more than 95 mol%.

The average degree of polymerization of polyvinyl alcohol (B), although it is not particularly limited, is preferably 200 to 3500 and more preferably 500 to 2500.

Note that the degree of saponification and average degree of polymerization are values represented by the following formulas and can be measured by a method in accordance with JIS K 6726.

[Formula 1]

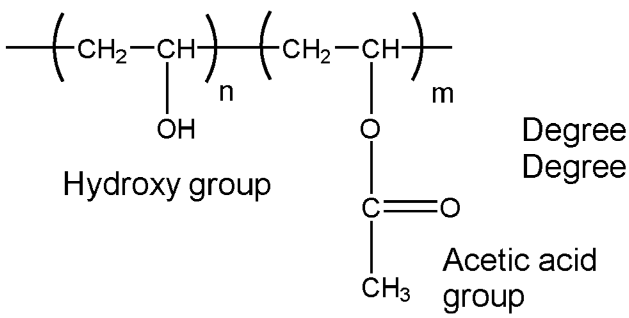


Degree of saponification = n/(m+n) × 100

Degree of polymerization = m+n

Polyvinyl alcohol (B) may be used alone or not less than two types of polyvinyl alcohols may be used in combination. Polyvinyl alcohol (B) can be produced by a method known in the art or a customary method. Alternatively, a commercially available product of a polyvinyl alcohol having a degree of saponification of not less than 50% can be used. Examples of the commercially available product include Gohsenol (trade name) EG-05" (degree of saponification: 86.5 to 89.0 mol%), "Gohsenol NH-17Q" (degree of saponification: 100.0 mol%), "Gohsenol KH-20" (degree of saponification: 78.5 to 81.5 mol%), "Gohsenol KH-17" (degree of saponification: 78.5 to 81.5 mol%), "Gohsenol KL-05" (degree of saponification: 78.5 to 82.0 mol%), "Gohsenol KL-03" (degree of saponification: 78.5 to 82.0 mol%), "Gohsenol KM-11" (degree of saponification: 76.7 to 79.3 mol%), "Gohsenol KP-08R" (degree of saponification: 71.0 to 73.5 mol%), and "Gohsenol NK-05R" (degree of saponification: 71.0 to 75.0 mol%) (all the above are manufactured by Nippon Synthetic Chemical Industry Co., Ltd.); and "POVAL (trade name) PVA-203" (degree of saponification: 88 mol%), "POVAL PVA-205" (degree of saponification: 88 mol%), "POVAL 424H" (degree of saponification: 78.5 to 80.5 mol%) (all the above are manufactured by Kuraray Co., Ltd.).

[Water-soluble organic additive (C)]

Described herein is a water-soluble cellulose acetate resin composition comprising 50 to 95% by weight of cellulose acetate (A2) having a total degree of acetyl substitution of 0.5 to 1.0 and 5 to 50% by weight of water-soluble organic additive (C) (except polyvinyl alcohol). This composition is not according to the present invention.

The water-soluble organic additive (C) to be contained is not particularly limited as long as it is a water-soluble organic compound except polyvinyl alcohol and can be appropriately selected depending on the use. A water-soluble organic additive (C) may be used alone or not less than two water-soluble organic additives may be used in combination. Examples of water-soluble organic additive (C) include a water-soluble polymer and a water-soluble low molecular weight compound.

Examples of the water-soluble polymer include natural polymers such as starch, mannan, pectin, alginic acid, dextran, pullulan, glue and gelatin; semi-synthetic polymers including cellulosic polymer (except cellulose acetate) such as carboxymethyl cellulose, and hydroxyethyl cellulose; polyalkylene glycols such as polyethylene glycol, polyethylene oxide, polypropylene glycol and polypropylene oxide; and synthetic polymers such as polyalkylene oxide, sodium polyacrylate, polyacrylamide, polyethyleneimine and polyvinylpyrrolidone. The weight average molecular weight (or molecular weight) of the water-soluble polymer is, for example, 150 to 1000000, preferably 200 to 100000, further preferably 200 to 10000 and particularly preferably 200 to 1000. If the weight average molecular weight (or molecular weight) of the water-soluble polymer is excessively large, the compatibility thereof with cellulose acetate tends to decrease. In contrast,

if the weight average molecular weight (or molecular weight) is extremely small, the strength and elongation of a molded article tend to decrease.

Examples of the water-soluble low molecular weight compound include polyhydric alcohols (except polymer compounds), such as ethylene glycol, propylene glycol, butylene glycol, glycerin, erythritol, pentaerythritol, dipentaerythritol, xylitol, sorbitol and mannitol; monosaccharides such as glucose; and hetero atom-containing low molecular weight compounds such as 2-pyrolidone, dimethylsulfoxide, N,N-dimethylformamide and sulfolane.

Of them, as water-soluble organic additive (C), a polyalkylene glycol such as polyethylene glycol; a polyalkylene oxide such as polyethylene oxide; and a polyhydric alcohol (except polymer compounds) such as glycerin are preferable in view of e.g., physical properties, appearance and stability of the molded article; particularly, polyethylene glycol and polyethylene oxide are preferable and especially, polyethylene glycol is preferable.

The average weight molecular weight of polyethylene glycol (or molecular weight) is for example 150 to 5000 and preferably 200 to 1000.

[Water-soluble cellulose acetate resin composition]

The water-soluble cellulose acetate resin composition of the present invention contains cellulose acetate (A1) having a total degree of acetyl substitution of 0.4 to 1.6 and polyvinyl alcohol (B) having a degree of saponification of not less than 50 mol%. In the water-soluble cellulose acetate resin composition of the present invention, cellulose acetate (A1) and polyvinyl alcohol (B) are compatible with each other to form a transparent resin composition (polymer alloy). Furthermore, the permeability of a gas such as oxygen and water vapor is low, in other words, gas barrier performance is high. Moreover, the water-soluble cellulose acetate resin composition of the present invention is biodegradable and has high water-solubility and safety.

The water-soluble cellulose acetate resin composition of the present invention, since it has excellent properties as mentioned above, can be preferably applied to uses such as a base for the coating layer of a coated preparation and a water-soluble cellulose acetate composite molded article. Details will be described later.

[Definition of compatibility]

The amorphous portion of a polymer changes from a glass state to a rubber state during a temperature raising process and a rubber state to a glass state during a temperature lowering process. The transition temperature (glass transition temperature or glass transition point) is one of the physical properties characterizing the polymer. When two types of polymers are blended, glass transition temperatures characteristic in individual original polymers are sometimes observed. In this case, it is determined that two types of polymers do not interact with each other on the molecular level. More specifically, if glass transition temperatures characteristic in the original polymers are observed in a polymer blend, it is determined that the polymer blend is incompatible.

When two types of polymers are blended, a single glass transition temperature, which is not derived from original polymers, is observed. In this case, it is determined that two types of polymers interact with each other on the molecular level. More specifically, if glass transition temperatures characteristic in the original polymers disappear and a new single glass transition temperature is observed in a polymer blend, it is determined that the polymer blend is compatible. In other words, "compatibility" may be defined in the case where the grass transition temperatures derived from original polymers disappear and a new single glass transition temperature is observed.

Note that in a blend of two types of polymers, the polymers are compatible with each other in an amorphous portion. In addition to this state, crystals of one or both original polymers are present in some case. Also, in this case, a single glass transition temperature alone is observed. This case is also defined as compatible.

The glass transition point of two types of polymers and a blend of the polymers and the melting point showing crystallinity are both can be observed by thermal analysis using differential scanning calorimetry (DSC). For example, when compatibility of two types of polymers (polymer A and polymer B) is determined, polymer blends different in ratio are subjected to thermal analysis and then, whether a pattern consisting of the glass transition point and an endothermic peak (showing crystallinity) corresponds to which one of the following chart patterns 1 to 4 is examined. In this way, compatibility can be determined.

At the glass transition point, an inflection point at which the base line of thermal analysis chart shifts to the endothermic side (lower) is observed and an endothermic peak is observed at the melting point.

Figure 1 schematically shows one (pattern 1) of the chart patterns obtained by subjecting polymer blends containing two types of polymers (polymer A and polymer B) different in ratio to differential scanning calorimetry (DSC) and showing that polymer A and polymer B are compatible with each other.

In pattern 1, neither polymer A nor polymer B have an endothermic peak showing crystallinity; none of the blends containing polymer A and polymer B different in ratio (% by weight) (for example, polymer A/polymer B = 80/20 to 20/80) show glass transition points derived from polymer A or polymer B (↓) and single glass transition point (;) specific

to each of the polymer blends is only observed.

Figure 2 schematically shows one (pattern 2) of the chart patterns obtained by subjecting polymer blends containing two types of polymers (polymer A and polymer B) different in ratio to differential scanning calorimetry (DSC) and showing that polymer A and polymer B are not compatible with each other.

In pattern 2, neither polymer A nor polymer B have an endothermic peak showing crystallinity; the blends containing polymer A and polymer B different in ratio (% by weight) (for example, polymer A/polymer B = 80/20 to 20/80) all show two glass transition points derived from polymer A or polymer B (↓), respectively.

Note that, assuming that the glass transition points of polymer A and polymer B are previously known and these points are separately present at a sufficient distance even in consideration of accuracy of measurement for glass transition point (for example, approximately ± 3°C, which varies depending on measurement condition), if a single glass transition point is observed in the polymer blend and determined as the same as one of the glass transition points of the polymers and the glass transition point of the other polymer is not observed for the reason of measurement sensitivity or others, the substantially same pattern as pattern 2 is determined (obtained).

Figure 3 schematically shows one (pattern 3) of the chart patterns obtained by subjecting polymer blends containing two types of polymers (polymer A and polymer B) different in ratio to differential scanning calorimetry (DSC) and showing that polymer A and polymer B are compatible with each other.

In pattern 3, polymer A does not have an endothermic peak showing crystallinity; whereas, polymer B has an endothermic peak (*) showing crystallinity. In blends containing polymer A and polymer B different in ratio (% by weight) (for example, polymer A/polymer B = 80/20 to 20/80), the glass transition point (↓) derived from polymer A or polymer B is not shown in all cases and a single glass transition point (↓) specific to the polymer blend is shown. Furthermore, in a specific case where polymer A and polymer B are blended in a predetermined ratio (for example, polymer A/polymer B = 40/60 to 20/80), an endothermic peak (*) showing crystallinity and derived from polymer B is observed.

Figure 4 schematically shows one (pattern 4) of the chart patterns obtained by subjecting polymer blends containing two types of polymers (polymer A and polymer B) different in ratio to differential scanning calorimetry (DSC) and showing that polymer A and polymer B are not compatible with each other.

In pattern 4, polymer A does not have an endothermic peak showing crystallinity; whereas polymer B have an endothermic peak(*) showing crystallinity. In blends containing polymer A and polymer B different in ratio (% by weight) (for example, polymer A/polymer B = 80/20 to 20/80), two glass transition points (↓) derived from polymer A and polymer B are shown in all cases. Further in a specific case where polymer A and polymer B are blended in a predetermined ratio (% by weight) (for example, polymer A/polymer B = 80/20 to 20/80), an endothermic peak (*) showing crystallinity and derived from polymer B is observed.

Note that, assuming that polymer A or polymer B has an endothermic peak showing crystallinity; glass transition points of polymer A and polymer B are previously known; and these points are separately present at a sufficient distance even in consideration of accuracy of measurement for glass transition point (for example, approximately ± 3°C, which varies depending on measurement condition), if a single glass transition point is observed in the polymer blend and determined as the same as one of the glass transition points of the polymers and the glass transition point of the other polymer is not observed for the reason of measurement sensitivity or others, the substantially same pattern as pattern 4 is determined (obtained).

DSC thermal analysis of the water-soluble cellulose acetate resin composition of the present invention can be carried out entirely in a nitrogen atmosphere. More specifically, the temperature of each sample (approximately 5 mg) is raised at a heating rate of 20°C/min up to 280°C by using DSC6200/EXSTAR6000 manufactured by Seiko Instruments Inc. After the crystal of a polyvinyl alcohol is once melt in this way, the sample was cooled to -30°C, and then, the temperature is raised again up to 280°C to obtain a stable thermogram. The analysis is performed based on the thermogram.

In the water-soluble cellulose acetate resin composition of the present invention, the upper limit of the content of polyvinyl alcohol (B) with respect to 100 parts by weight of cellulose acetate (A1), although it is not particularly limited, is preferably not more than 500 parts by weight, more preferably not more than 400 parts by weight, further more preferably not more than 300 parts by weight, further preferably not more than 200 parts by weight, further more preferably not more than 100 parts by weight, still further more preferably not more than 50 parts by weight and particularly preferably 25 parts by weight. If the content of polyvinyl alcohol (B) is not more than 500 parts by weight, cellulose acetate (A1) and polyvinyl alcohol (B) are compatible with each other to easily obtain a transparent resin composition. In contrast, the lower limit of the content of polyvinyl alcohol (B) with respect to 100 parts by weight of cellulose acetate (A1), although it is not particularly limited, is preferably not less than 5 parts by weigh, more preferably not less than 10 parts by weight and further preferable not less than 15 parts by weight. If the content of polyvinyl alcohol (B) is not more than 5 parts by weight, the oxygen permeability and water vapor permeability of the water-soluble cellulose acetate resin composition to be obtained are easily decreased.

In the water-soluble cellulose acetate resin composition of the present invention, the content of cellulose acetate (A1) is preferably 5 to 95% by weight, more preferably 10 to 90% by weight and particularly preferably 15 to 85% by

weight. The content of polyvinyl alcohol (B) is preferably 5 to 95% by weight, more preferably 10 to 90% by weight and particularly preferably 15 to 85% by weight.

The water-soluble cellulose acetate resin composition of the present invention may contain, if necessary, components other than cellulose acetate (A1) and polyvinyl alcohol (B), as long as the effects of the invention are not undermined.

Examples of the other components include various additives used in e.g., medical drugs and foods (e.g., an excipient, disintegrant, a binder, a lubricant, a colorant, a pH modifier, a surfactant, a stabilizer, an acidulant, a fragrance and a fluidizing agent), other water-soluble and biodegradable resins, a thermal degradation inhibitor, a thermal discoloration inhibitor, a biodegradation accelerator, a plasticizer, a lubricant, an antistatic agent, a dye, a pigment, a lubricant, a UV absorber, an antioxidant and a fragrance.

In the water-soluble cellulose acetate resin composition of the present invention, the total content of cellulose acetate (A1) and polyvinyl alcohol (B) is, for example, not less than 70% by weight, preferably not less than 80% by weight, more preferably not less than 90% by weight and further preferably not less than 95% by weight, and may be 100% by weight.

The water-soluble cellulose acetate resin composition of the present invention can be prepared by blending, for example, predetermined amounts of cellulose acetate (A1) and polyvinyl alcohol (B), if necessary, in combination with other components and a solvent, followed by evaporating the solvent. For example, individual components and the solvent are mixed in a blender such as a Henschel Mixer, casting the mixture on a flat plate such as a glass plate, and drying the mixture by air at room temperature, or by hot air at a temperature of 40 to 60°C to obtain a film-like molded article of the water-soluble cellulose acetate resin composition.

As a solvent for dissolving cellulose acetate (A1) and polyvinyl alcohol (B), e.g., water, N,N-dimethylformamide and N,N-dimethylacetamide are mentioned.

The glass transition temperature (Tg) (lower Tg if a plurality of Tg are present) of the resin composition (e.g., like film) thus obtained is, for example, 50 to 230°C, preferably 60 to 220°C and more preferably 70 to 210°C.

As mentioned above, described herein is a water-soluble cellulose acetate resin composition (not according to the present invention) containing 50 to 95% by weight of cellulose acetate (A2) having a total degree of acetyl substitution of 0.5 to 1.0 and 5 to 50% by weight of a water-soluble organic additive (C). Since the water-soluble cellulose acetate resin composition contains cellulose acetate (A2) and water-soluble organic additive (C) within the above ranges, a molten state can be obtained at a relatively low temperature and molding can be made at a relatively low temperature, with the result that a molded article less colored can be produced. If a fiber is obtained, a water-soluble and biodegradable cellulose acetate fiber having a relatively low fineness (for example, approximately 2 denier) can be obtained. The case where the content of cellulose acetate (A2) is less than 50% by weight and the case where the content of water-soluble organic additive (C) exceeds 50% by weight, are not preferable because characteristics intrinsic to cellulose acetate cannot be obtained and the strength of a molded article decreases. In the case where the content of cellulose acetate (A2) exceeds 95% by weight and the case where the content of water-soluble organic additive (C) is less than 5% by weight, the glass transition temperature of the composition increases and the melting temperature increases, with the result that the molded article significantly colored. In addition, probably because formability becomes low, the strength (for example, yarn strength) of a molded article (for example, fiber) decreases.

In the water-soluble cellulose acetate resin composition, the content of cellulose acetate (A2) is preferably 50 to 90% by weight, more preferably 50 to 80% by weight and particularly preferably 55 to 75% by weight. The content of water-soluble organic additive (C) is preferably 10 to 50% by weight, more preferably 20 to 50% by weight and particularly preferably 25 to 45% by weight.

The water-soluble cellulose acetate resin composition may contain, if necessary, components other than cellulose acetate (A2) and water-soluble organic additive (C), as long as the effects of the invention are not undermined.

Examples of the other components include, a water-soluble and biodegradable resin, a thermal degradation inhibitor, a thermal discoloration inhibitor, a biodegradation accelerator, a plasticizer, a lubricant, an antistatic agent, a dye, a pigment, a lubricant, a UV absorber, an antioxidant and a fragrance.

The total content of cellulose acetate (A2) and water-soluble organic additive (C) is, for example, not less than 70% by weight, preferably not less than 80% by weight, more preferably not less than 90% by weight and further preferably not less than 95% by weight, and may be 100% by weight.

The water-soluble cellulose acetate resin composition can be prepared by mixing, for example, predetermined amounts of cellulose acetate (A2) and water-soluble organic additive (C), if necessary, in combination with other components. For example, individual components are mixed in a blender such as a Henschel Mixer, melt-extruded like a strand and cut into pieces of a suitable size, thereby obtaining a pellet-like resin composition.

The glass transition temperature (Tg) (lower Tg if a plurality of Tg are present) of the resin composition (e.g., pellets) thus obtained, is for example, 90 to 230°C, preferably 100 to 200°C and more preferably 130 to 170°C.

[Water-soluble cellulose acetate composite molded article]

The water-soluble cellulose acetate composite molded article of the present invention can be produced by molding the water-soluble cellulose acetate resin composition of the present invention hereinafter via a molten state. More specifically, the water-soluble cellulose acetate composite molded article can be produced by a melt spinning method (including melt blow spinning method).

For example, a fibrous water-soluble cellulose acetate composite molded article can be obtained by heat-melting the water-soluble cellulose acetate resin composition (e.g., pellets) by a melt extrusion spinning machine known in the art, spinning it from a spinning nozzle, stretching continuous long fiber filaments spun by an ejector with the help of high-speed high-pressure air and winding it up or opening the filaments and collecting them on the support surface for collection to form a web. Furthermore, a nonwoven fabric can be produced by blowing out the water-soluble cellulose acetate resin composition melted by an extruder like a thread by a high-temperature and high-speed airflow from a die having e.g., several hundreds to several thousands of nozzles per meter in the width direction, accumulating the stretched fibrous resin on a conveyor and allowing the fibers to entangle and fuse on the conveyor during the accumulation step (melt blow spinning method). The spinning temperature during the melt spinning is, for example, 130 to 240°C, preferably 140 to 200°C and more preferably 150 to 188°C. If the spinning temperature is extremely high, a molded article is significantly colored. In contrast, if the spinning temperature is extremely low, the viscosity of the composition decreases, with the result that it becomes difficult to increase the spin draft ratio and productivity tends to decrease. The spin draft ratio is, for example, approximately 200 to 600.

The fineness of the yarn obtained by the melt spinning method is, for example, 1 to 9 denier (d) and preferably 1.3 to 5 denier (d). The strength of the yarn is, for example, approximately 0.3 to 1.5 g/d.

The water-soluble cellulose acetate composite molded article of the present invention can be produced by injection molding of the water-soluble cellulose acetate resin composition of the present invention. Moldings having a wide variety of shapes can be obtained by injection molding.

Examples of the water-soluble cellulose acetate composite molded article include tobacco filters, nonwoven fabrics and various injection molded articles. The water-soluble cellulose acetate composite molded article of the present invention has water solubility and biodegradability. Because of this, the molded article has an advantage in that it does not put a load on nature and humans. In addition, it is not necessary to use dry air of approximately 400°C for producing the article unlike dry spinning and thus energy consumption can be saved. Furthermore, a molded article (for example, fiber) less colored can be obtained and thus the molded article of the invention is excellent in view of quality.

[Coated preparation]

The water-soluble cellulose acetate resin composition of the present invention can be preferably used as a base for the coating layer of a coated preparation. Particularly, the water-soluble cellulose acetate resin composition of the present invention is extremely suitable as a base for the coating layer of a coated preparation, since cellulose acetate (A1) and polyvinyl alcohol (B) are compatible with each other to form a transparent resin composition (polymer alloy), which is low in permeability of a gas such as oxygen and water vapor, biodegradable, water-soluble and high in safety.

The coated preparation of the present invention may be, for example, a medical drug, a food and an agricultural chemical.

Examples of the medical drug include, but are not particularly limited to, an analgesic, an antipyretic analgesic, a headache therapeutic agent, an antitussive drug, an expectorant, a sedative, an antispasmodic agent, an antihistamine agent, an anti-allergic agent, an antiplasmin agent, a bronchodilator, an asthma therapeutic agent, a diabetic drug, a liver disease therapeutic agent, an ulcer therapeutic agent, a gastritis therapeutic agent, a stomachic digestive aid, a gastrointestinal motility activator, a hypertension therapeutic agent, an angina therapeutic agent, a blood-pressure-lowering drug, a hypotension therapeutic agent, a hyperlipidemia therapeutic agent, a hormonal agent, an antibiotic, an antiviral agent, a sulfa drug, an antiinflammatory agent, a psychoneurotic agent, an ocular hypotensive agent, an antiemetic, an antidiarrheal, a gout therapeutic agent, an arrhythmia therapeutic agent, a vasoconstrictor, a digestive, a sleeping pill or a hypnotic agent, a sympatholytic agent, an anemia therapeutic agent, an anticonvulsant agent, an antivertigo agent, a therapeutic agent for disorder of the sense of equilibrium, a tuberculosis therapeutic agent, a vitamin deficiency therapeutic agent, a dementia therapeutic agent, a urinary incontinence therapeutic agent, an antisepsis, a mouth disinfectant, a parasiticide, vitamins, amino acids and minerals. These medical drugs may be used in combination by mixing not less than two types in an appropriate ratio.

Examples of the food that can be preferably used include healthy foods such as a green juice powder, aglycon, agaricus, ashwagandha, astaxanthin, acerola, amino acids (e.g., valine, leucine, isoleucine, lysine, methionine, phenylalanine, threonine, tryptophan, histidine, cystine, tyrosine, arginine, alanine, aspartic acid, a seaweed powder, glutamine, glutamic acid, glycine, proline, serine), alginic acid, a ginkgo leaf extract, sardine peptide, turmeric, uronic acid, echinacea, Siberian ginseng, oligosaccharide, oleic acid, a nuclear protein, a dried bonito peptide, catechin, potassium, calcium,

carotenoid, Garcinia, L-carnitine, chitosan, conjugated linoleic acid, krantz aloe, a Gymnema sylvestre extract, citric acid, Orthosiphon stamineus, glyceride, glycerol, glucagon, glutamine, glucosamine, L-glutamine, chlorella, a cranberry extract, cat's claw, germanium, enzyme, a ginseng extract, coenzyme Q10, collagen, a collagen peptide, Coleus forskolin, chondroitin, a Psyllium husk powder, a hawthorn extract, saponin, a lipid, L-cystine, a Perilla extract, Citri max, a fatty acid, a plant sterol, a seed extract, spirulina, squalene, white willow, ceramide, selenium, a Saint John's wort extract, soybean isoflavone, soybean saponin, a soybean peptide, soybean lecithin, a monosaccharide, a protein, a Chest tree extract, iron, cupper, docosahexaenoic acid, tocotrienol, Nattokinase, a *Bacillus Natto* culture extract, niacin sodium, nicotinic acid, a disaccharide, lactic acid bacteria, garlic, saw palmetto, a germinated rice, a pearl barley extract, a herbal extract, a Valeriyan extract, pantothenic acid, hyaluronic acid, biotin, chromium picolinate, vitamin A, A2 vitamin B1, B2, B6, vitamin B12, vitamin C, vitamin D, vitamin E, vitamin K, hydroxytyrosol, a Bifidobacterium, a brewery yeast, fructo-oligosaccharide, flavonoid, a butchers bloom extract, black cohosh, blueberry, a prune extract, proanthocyanidin, a protein, propolis, bromelain, probiotics, phosphatidylcholine, phosphatidylserine, β-carotene, a peptide, a safflower extract, a maitake extract, a Maca-extract, magnesium, milk thistle, manganese, mitochondria, mineral, mucopolysaccaride, melatonin, Fomes yucatensis, a melilot extract powder, molybdenum, a vegetable powder, folic acid, lactose, lycopene, linoleic acid, lipoic acid, phosphor, lutein, lecithin, rosmarinic acid, royal jelly, DHA and EPA. These foods may be used in combination by mixing not less than two types in an appropriate ratio.

Examples of the agricultural chemical include, but are not particularly limited to, an antimicrobial agent, an antiviral agent, a fungicide, a miticide, an insecticide, a nematicide, a rodenticide, an herbicide, a plant growth regulator, a fertilizer and a safener. These agricultural chemicals may be used in combination by mixing not less than two types in an appropriate ratio.

The content of e.g., a medical drug, an agricultural chemical and a food in the coated preparation of the present invention is appropriately selected from the range of 5 to 90% by weight of the coated preparation.

In the coated preparation of the present invention, a core to be coated with a coating layer (hereinafter, referred to as a "plain tablet") may be a solid preparation such as a tablet, a granule and a powder, which contains e.g., a medical drug, food, agricultural chemical as mentioned above; may further contain various additives and produced by a method known in the technical field.

As the additive, an additive usually used in e.g., a medical drug, a food and an agricultural chemical can be used without limit. Examples thereof include, an excipient (carrier) such as cornstarch, $\alpha$starch, lactose, white sugar, maltose, trehalose, cyclic tetra-saccharide, dextrin, starch, crystalline cellulose, sodium bicarbonate and calcium carbonate; a disintegrant such as carboxymethyl cellulose, agar and gelatin powder; a binder such as polyvinyl alcohol, methylcellulose and hydroxypropylcellulose; a lubricant such as silica, magnesium stearate and talc; a surfactant; an emulsifier; a plasticizer; a preservative (antimicrobial agent); a humectant; a thickener; a thickening stabilizer; an antioxidant; a chelating agent; a dye; a fragrance; an acidulant; a seasoning; a pH modifier; vitamins; various amino acids; minerals; an oil; a nutritional supplement; a water-soluble polymer; an electrolyte; a diluent; water; physiological saline; an alcohol; an organic solvent; and an animal and plant extracts. These additive may be used in combination by mixing not less than two types in an appropriate ratio.

The coating solution for forming the coating layer of a coated preparation of the present invention may contain, other than a water-soluble cellulose acetate resin composition of the present invention, various additives including a light shielding agent and/or a colorant such as titanium oxide, talc, iron sesquioxide and yellow ferric oxide; a plasticizer such as polyethylene glycol, triethyl citrate, castor oil and polysorbates; an organic acid such as citric acid, tartaric acid, malic acid and ascorbic acid; a sugar such as lactose and mannitol and a sugar alcohol.

The coating solution may contain, other than a water-soluble cellulose acetate resin composition of the present invention, a water-soluble film coating base, an enteric property film coating base and a sustained release film coating base.

Examples of the water-soluble film coating base include a cellulosic polymer such as hydroxypropylcellulose, hydroxypropylmethylcellulose, hydroxyethyl cellulose and methyl hydroxyethyl cellulose; a synthetic polymer such as polyvinyl acetal diethylaminoacetate, aminoalkyl methacrylate copolymer E [EUDRAGIT E (trade name), Rohm Pharma] and polyvinylpyrrolidone; and polysaccharide such as pullulan.

Examples of the enteric property film coating base include, a cellulosic polymer such as hydroxypropylmethylcellulose phthalate, hydroxypropylmethylcellulose acetate succinate, carboxymethylethylcellulose and cellulose acetate phthalate; an acrylic acid polymer such as methacrylic acid copolymer L [EUDRAGIT L (trade name), Rohm Pharma], methacrylic acid copolymer LD [EUDRAGIT L-30D55 (trade name), Rohm Pharma], methacrylic acid copolymer S [EUDRAGIT S (trade name), Rohm Pharma]; and natural products such as shellac.

Examples of the sustained release film coating base include a cellulosic polymer such as ethylcellulose; and an acrylic acid polymer such as aminoalkyl methacrylate copolymer RS [EUDRAGIT RS (trade name), Rohm Pharma] and an ethyl acrylate-methyl methacrylate copolymer suspension [EUDRAGIT NE (trade name), Rohm Pharma].

The content of the water-soluble cellulose acetate resin composition of the present invention in the coating solution (100% by weight, except a solvent) is not particularly limited; however, the content is appropriately selected

from the range of 10 to 100% by weight.

The coated preparation of the present invention can be produced by applying the coating solution to the plain tablet by using a commercially available film coating apparatus such as a pan coating apparatus, a fluidized layer coating apparatus, and a full-round rotary drum coating machine. The thickness of the coating layer is usually not more than 100 um and preferably 2 to 50 um.

The coated preparation of the present invention may be a multilayer coated preparation obtained by further applying the coating liquid or another coating solution.

The coated preparation of the present invention thus obtained may be a quick-release preparation, a sustained release preparation or an enteric preparation.

The quick-release preparation refers to a preparation quickly releasing a component in a first solution (pH 1.2) and second solution (pH 6.8) in the dissolution test specified in the sixteenth revised Japanese pharmacopoeia (for example, a release rate of not less than 85% in 10 minutes).

The sustained release preparation refers to a preparation releasing a composition at a slow rate in a first solution (pH 1.2) and second solution (pH 6.8) (for example, a release rate of less than 85 % in 10 minutes) in the dissolution test specified in the sixteenth revised Japanese Pharmacopoeia.

The enteric preparations refers to a preparation releasing a composition at a slow rate in a first solution (pH 1.2) (for example, a release rate of less than 85 % in 10 minutes) and at a fast rate in a second solution (pH 6.8) (for example, a release rate of not less than 85% in 10 minutes) in the dissolution test specified in the sixteenth revised Japanese Pharmacopoeia.

## Examples

Hereinafter, the present invention will be described in more detail with reference to Examples. However, the present invention is not intended to be limited by these Examples.

### Synthesis Example 1

With respect to 1 part by weight of cellulose acetate (manufactured by Daicel Corp., trade name "L-50", total degree of acetyl substitution: 2.43, 6% viscosity: 110 mPa·s), 5.1 parts by weight of acetic acid and 2.0 parts by weight of water were added, and the mixture was stirred at 40°C for 5 hours to obtain a solution homogeneous in the outer appearance. To this solution, 0.13 parts by weight of sulfuric acid were added, and the obtained solution was kept at 70°C for hydrolysis (partial deacetylation reaction; ripening). For this hydrolysis process, water was added to the system two times during the course thereof. Specifically, 0.67 parts by weight of water were added 1 hour after the start of the reaction, and 1.67 parts by weight of water were added 2 hours thereafter, followed by reaction for another 3 hours. The total time of hydrolysis is 6 hours. The operation from the start of the reaction to the first addition of water is referred to as the first hydrolysis; the operation from the first addition of water to the second addition of water is referred to as the second hydrolysis; and the operation from the second addition of water to the termination of the reaction (completion of hydrolysis) is referred to as the third hydrolysis.

After the hydrolysis, the temperature of the system was lowered to room temperature (approximately 25°C) by cooling, and precipitation was caused by adding 15 parts by weight of a mixed solvent of acetone/methanol = 1/2 (weight ratio) (precipitating agent) to the reaction mixture.

The precipitates were recovered as wet cake having a solid content of 15% by weight, and 8 parts by weight of methanol were added thereto, followed by washing by deliquoring until a solid content of 15% by weight. This operation was repeated three times. The washed precipitates were further washed and neutralized two times with 8 parts by weight of methanol containing 0.004% by weight of potassium acetate, and dried to obtain cellulose acetate (cellulose acetate with a low degree of substitution).

### (Synthesis Examples 2 to 13)

Each cellulose acetate (cellulose acetate with a low degree of substitution) was obtained in the same manner as in Synthesis Example 1 except that the reaction temperature, first hydrolysis time, second ripe hydrolysis ing time, third hydrolysis time and precipitation agent were changed to those shown in Tables 1 and 2.

### (Synthesis Example 14) (method described in Example 2 of Japanese Patent Laid-Open No. 10-317228)

A mixture consisting of coniferous sulfite pulp ($\alpha$ cellulose content 96%)(13 parts by weight), sulfuric acid (2 parts by weight), acetic anhydride (35 parts by weight) and glacial acetic acid (50 parts by weight) was subjected to an acetylation reaction at 36°C for 3 hours. After completion of the reaction, the reaction product was partially neutralized

with potassium acetate; the remaining sulfuric acid was set to be 1 part by weight and the amount of water in a volatile-matter content to be 10% by weight; and hydrolysis was performed at 60°C for 9 hours. Thereafter, complete neutralization, precipitation, washing and drying were performed to obtain cellulose acetate (CA-40) having an acetylation degree of 40.2% (degree of substitution (DS) 1.51). The intrinsic viscosity of the cellulose acetate was determined by the method described in Japanese Patent Laid-Open No. 10-317228 (paragraph 0016) and the average degree of polymerization was obtained. As a result, the average degree of polymerization was 107. DPw, which was measured by a method described later, was 210 and DPw/DPn was 2.1.

The total degree of acetyl substitution (DS), the weight-average degree of polymerization (DPw), and the dispersity (DPw / DPn) of the cellulose acetate obtained in each Synthesis Example were measured by methods given below. The production conditions and the results of measuring the physical properties of the obtained cellulose acetate with a low degree of substitution (the analysis values) are shown in Tables 1 and 2. In Tables 1 and 2, "Sample No." means the sample number of the obtained cellulose acetate with a low degree of substitution.

(Measurement of degree of substitution (DS))

The unsubstituted hydroxy groups of each a water-soluble cellulose acetate sample were propionylated in accordance with the method of Tezuka (Carbohydr. Res. 273, 83 (1995)). The degree of acetyl substitution of the propionylated cellulose acetate with a low degree of substitution was determined in accordance with the method of Tezuka (idem) from the signals of acetyl carbonyl at 169 to 171 ppm and the signals of propionyl carbonyl at 172 to 174 ppm in $^{13}$C-NMR.

(Measurement of compositional distribution index (CDI))

CDI of each cellulose acetate was determined by HPLC analysis under the following conditions after conversion to propionylated cellulose acetate:

Apparatus: Agilent 1100 Series
Column: Waters Nova-Pak phenyl 60Å 4 um (150 mm × 3.9 mmΦ) + guard column
Column temperature: 30°C
Detection: Varian 380-LC
Injection volume: 5.0 μL (sample concentration: 0.1% (wt/vol))
Eluent: solution A: $MeOH/H_2O$ = 8/1 (v/v), solution B: $CHCl_3/MeOH$ = 8/1 (v/v)
Gradient: A/B = 80/20 → 0/100 (28 min); Flow rate: 0.7 mL/min

First, preparations having known DS in an acetyl DS (total degree of acetyl substitution) range of 0 to 3 were subjected to HPLC analysis to prepare a calibration curve of elution time vs. DS. On the basis of the calibration curve, an elution curve (time vs. detection intensity curve) of an unknown sample was converted to a DS vs. detection intensity curve (compositional distribution curve). An uncorrected half height width X in this compositional distribution curve was determined, and a corrected half height width Z of compositional distribution was determined according to the following expression:

$$Z = (X^2 - Y^2)^{1/2}$$

Y represents an apparatus constant defined according to the following expression:

$$Y = (a - b)\ x/3 + b$$

a: the X value of the preparation having acetyl DS = 3

b: the X value of the preparation having acetyl DS = 0

x: acetyl DS of the unknown sample

The compositional distribution index (CDI) was determined from the corrected half height width Z according to the following expression:

$$CDI = Z / Z_0$$

In this context, $Z_0$ represents compositional distribution formed when acetylation and partial deacetylation in the preparation of all partially substituted cellulose acetates occur with equal probability among all hydroxy groups (or acetyl groups) in all molecules, and is defined according to the following expression:

[Expression 5]

$$Z_0 = 2.35482\sqrt{3 \cdot DPw \cdot p \cdot q}/DPw$$

DPw: the weight-average degree of polymerization
p: (Acetyl DS of the unknown sample) / 3
q: 1 - p

The CDI of the water-soluble cellulose acetate thus obtained was 1.4.

(Measurement of weight average polymerization degree (DPw), polydispersity (DPw/DPn))

The weight average polymerization degree and polydispersity of cellulose acetate were determined by obtaining propionylated cellulose acetate and then measuring GPC-light scattering in the following conditions.

Apparatus: GPC "SYSTEM-21H" manufactured by Shodex
Solvent: Acetone
Column: Two GMHxl (Tosoh Corp.) columns, guard column (TSKgel guardcolumn HXL-H manufactured by Tosoh Corp.)
Flow rate: 0.8 ml/min
Temperature: 29°C
Sample concentration: 0.25% (wt/vol)
Injection volume: 100 ul
Detection: MALLS (multi-angle light scattering detector) ("DAWN-EOS", manufactured by Wyatt Technology Corp.)
MALLS standard substance for correction: PMMA (molecular weight 27600)

[Table 1]

Table 1

| Synthesis Example No. | Sample No. | Reaction temperature | Reaction time | | | | Treatment | Analysis value | | | |
|---|---|---|---|---|---|---|---|---|---|---|---|
| | | | First ripening | Second ripening | Third ripening | Total | Precipitating agent | DS | DPw | DPw/DPn | CDI |
| | | (°C) | (hr) | (hr) | (hr) | (hr) | | (-) | (-) | (-) | (-) |
| Synthesis Example 1 | WSCA-1.2 | 70 | 1 | 2 | 3 | 6 | Acetone/methanol (1/2, w/w) | 1.21 | 358 | 2.1 | 1.5 |
| Synthesis Example 2 | WSCA-1.1 | 70 | 1 | 2 | 4 | 7 | Acetone/methanol (1/2, w/w) | 1.10 | 272 | 2.0 | 1.4 |
| Synthesis Example 3 | WSCA-1.0 | 70 | 1 | 2 | 5 | 8 | Acetone/methanol (1/2, w/w) | 1.00 | 214 | 1.9 | 1.5 |
| Synthesis Example 4 | WSCA-0.9 | 70 | 1 | 2 | 6 | 9 | Acetone/methanol (1/2, w/w) | 0.87 | 180 | 1.9 | 1.4 |
| Synthesis Example 5 | WSCA-0.8 | 70 | 1 | 2 | 7 | 10 | Acetone/methanol (1/1, w/w) | 0.81 | 155 | 1.9 | 1.4 |
| Synthesis Example 6 | WSCA-0.7 | 70 | 1 | 2 | 8 | 11 | Acetone/methanol (1/1, w/w) | 0.76 | 134 | 1.9 | 1.5 |
| Synthesis Example 7 | WSCA-0.6 | 70 | 1 | 2 | 9 | 12 | Acetone/methanol (1/1, w/w) | 0.63 | 120 | 1.9 | 1.6 |
| Synthesis Example 8 | WSCA-0.5 | 70 | 1 | 2 | 11 | 14 | Acetone /2-propanol (1/2, w/w) | 0.51 | 97 | 1.9 | 1.6 |
| Synthesis Example 9 | WSCA-0.4 | 70 | 1 | 2 | 14 | 17 | Acetone /2-propanol (1/2, w/w) | 0.39 | 75 | 18 | 1.7 |

[Table 2]

Table 2

| Synthesis Example No. | Sample No. | Reaction temperature | Reaction time | | | | Treatment | Analysis value | | | |
|---|---|---|---|---|---|---|---|---|---|---|---|
| | | | First ripening | Second ripening | Third ripening | Total | Precipitating agent | DS | DPw | DPw/ DPn | CDI |
| | | (°C) | (hr) | (hr) | (hr) | (hr) | | (-) | (-) | (-) | (-) |
| Synthesis Example 10 | WSCA-70-0.9 | 70 | 1 | 2 | 6 | 9 | Acetone/methanol (1/2, w/w) | 0.87 | 180 | 1.9 | 1.4 |
| Synthesis Example 11 | WSCA-70-0.6 | 70 | 1 | 2 | 9 | 12 | Acetone/methanol (1/1, w/w) | 0.63 | 120 | 1.9 | 1.6 |
| Synthesis Example 12 | WSCA-40-0.9 | 40 | 8 | 16 | 36 | 60 | Methanol | 0.87 | 170 | 2.0 | 2.4 |
| Synthesis Example 13 | WSCA-40-0.7 | 40 | 8 | 16 | 50 | 74 | Methanol | 0.70 | 117 | 2.0 | 26 |

Examples 1 to 25, Comparative Examples 1 to 36, Reference Examples 1 to 4

Cellulose acetate different in total degree of acetyl substitution and prepared in accordance with a composition shown in Tables 3 to 5 and a polyvinyl alcohol different in degree of saponification were mixed in N,N-dimethylformamide or N,N-dimethylacetamide. The mixture was stirred, casted in a glass petri dish and dried in air to prepare a blend film. In Tables 3 to 5, the "ratio" is expressed by % by weight.

The resultant films were subjected to the following evaluations. The results are shown in Tables 3 to 5.

[Appearance]

The films obtained were visually observed. Transparent or slightly turbid film was accepted; whereas, a turbid film was rejected.

[Differential scanning calorimetry (DSC)]

Thermal analysis by DSC was carried out by using DSC6200/EXSTAR6000 manufactured by Seiko Instruments Inc. Measurement was entirely carried out in a nitrogen atmosphere and at a heating rate of 20°C/min. Each sample (approximately 5 mg) was heated to 280°C to once melt a vinyl polymer crystal, then quickly cooled to - 30°C and again heated up to 280°C. In this way, a stable thermogram was obtained and glass transition temperature and the presence or absence of an endothermic peak of a melting point were observed.

With respect to the polymer blends each containing cellulose acetate different in total degree of acetyl substitution and a polyvinyl alcohol different in degree of saponification, in different ratio (% by weight) (cellulose acetate/polyvinyl alcohol = 80/20 to 20/80), the glass transition temperature (;) and melting point endothermic peak (*) were measured to obtain charts. Thereafter, which one of the patterns 1 to 4 (shown in Figure 1 to 4) the pattern of a chart corresponds to, was determined to evaluate compatibility.

With respect to Examples 9 to 13, 29 to 32, Reference Examples 1 to 4, glass transition temperature (Tg), presence or absence (observed or not) of a melting point (Tm) or temperature of a melting point (°C) are shown in Tables 3 and 5.

Tg: The temperature (°C) of the intersection between a base line and a tangent line on an inflection point on the endothermic side (°C)

Tm: Temperature (°C) of endothermic peak (peak top)

Table 3

| Experiment No. | Film composition | | | | | | Appearance of film | Thermal analysis | | Note |
|---|---|---|---|---|---|---|---|---|---|---|
| | Cellulose acetate | | | PVA | | | | Chart pattern | Compatibility determination | |
| | Sample No. | Substitution degree | Ratio | L-0302 | EG-05 | NH-17Q | | | | |
| | | | | Ratio | Ratio | Ratio | | | | |
| | | | % | % | % | % | | | | |
| Example 1 | WSCA -0.9 | 0.9 | 20 | 0 | 80 | 0 | Slightly turbid | Pattern 3 | Compatible | |
| Example 2 | | 0.9 | 40 | 0 | 60 | 0 | Slightly turbid | | | |
| Example 3 | | 0.9 | 60 | 0 | 40 | 0 | Transparent | | | |
| Example 4 | | 0.9 | 80 | 0 | 20 | 0 | Transparent | | | |
| Example 5 | | 0.9 | 20 | 0 | 0 | 80 | Slightly turbid | Pattern 3 | Compatible | |
| Example 6 | | 0.9 | 40 | 0 | 0 | 60 | Slightly turbid | | | |
| Example 7 | | 0.9 | 60 | 0 | 0 | 40 | Transparent | | | |
| Example 8 | | 0.9 | 80 | 0 | 0 | 20 | Transparent | | | |

(continued)

| Experiment No. | Film composition: Cellulose acetate – Sample No. | Cellulose acetate – Substitution degree | Cellulose acetate – Ratio | PVA – L-0302 Ratio | PVA – EG-05 Ratio | PVA – NH-17Q Ratio | Appearance of film | Thermal analysis – Chart pattern | Thermal analysis – Compatibility determination | Note |
|---|---|---|---|---|---|---|---|---|---|---|
| | | | % | % | % | % | | | | |
| Reference Example 1 | WSCA -0.8 | - | - | 0 | 100 | 0 | Transparent | Pattern 3 | Compatible | Tg:68°C, Tm:184°C |
| Example 9 | | 0.8 | 20 | 0 | 80 | 0 | Slightly turbid | | | Tg:72°C, Tm:174°C |
| Example 10 | | 0.8 | 40 | 0 | 60 | 0 | Slightly turbid | | | Tg:77°C, Tm:160°C |
| Example 11 | | 0.8 | 60 | 0 | 40 | 0 | Transparent | | | Tg:89°C, Tm: not observed |
| Example 12 | | 0.8 | 80 | 0 | 20 | 0 | Transparent | | | Tg:119°C, Tm: not observed |
| Example 13 | | 0.8 | 90 | 0 | 10 | 0 | Transparent | | | Tg:205°C, Tm: not observed |
| Reference Example 2 | | 0.8 | 100 | 0 | 0 | 0 | Transparent | | | Tg:232°C, Tm: not observed |
| Example 14 | | 0.8 | 20 | 0 | 0 | 80 | Slightly turbid | Pattern 3 | Compatible | |
| Example 15 | | 0.8 | 40 | 0 | 0 | 60 | Slightly turbid | | | |
| Example 16 | | 0.8 | 60 | 0 | 0 | 40 | Transparent | | | |
| Example 17 | | 0.8 | 80 | 0 | 0 | 20 | Transparent | | | |

(continued)

| Experiment No. | Film composition | | | | | | Appearance of film | Thermal analysis | | Note |
|---|---|---|---|---|---|---|---|---|---|---|
| | Cellulose acetate | | | PVA | | | | Chart pattern | Compatibility determination | |
| | Sample No. | Substitution degree | Ratio | L-0302 | EG-05 | NH-17Q | | | | |
| | | | | Ratio | Ratio | Ratio | | | | |
| | | | % | % | % | % | | | | |
| Example 18 | WSCA -0.6 | 0.6 | 20 | 0 | 80 | 0 | Slightly turbid | Pattern 3 | Compatible | |
| Example 19 | | 0.6 | 40 | 0 | 60 | 0 | Slightly turbid | | | |
| Example 20 | | 0.6 | 60 | 0 | 40 | 0 | Transparent | | | |
| Example 21 | | 0.6 | 80 | 0 | 20 | 0 | Transparent | | | |
| Example 22 | | 0.6 | 20 | 0 | 0 | 80 | Slightly turbid | Pattern 3 | Compatible | |
| Example 23 | | 0.6 | 40 | 0 | 0 | 60 | Slightly turbid | | | |
| Example 24 | | 0.6 | 60 | 0 | 0 | 40 | Transparent | | | |
| Example 25 | | 0.6 | 80 | 0 | 0 | 20 | Transparent | | | |

[Table 4]

Table 4

| Experiment No. | Film composition | | | | | | Appearance of film | Thermal analysis | | Note |
|---|---|---|---|---|---|---|---|---|---|---|
| | Cellulose acetate | | | PVA | | | | Chart pattern | Compatibility determination | |
| | Sample No. | Substitution degree | Ratio | L-0302 | EG-05 | NH-17Q | | | | |
| | | | | Ratio | Ratio | Ratio | | | | |
| | | | % | % | % | % | | | | |
| Comparative Example 1 | LM-80 | 2.1 | 20 | 80 | 0 | 0 | Turbid | Pattern 2 | Incompatible | |
| Comparative Example 2 | | 2.1 | 40 | 60 | 0 | 0 | Turbid | | | |
| Comparative Example 3 | | 2.1 | 60 | 40 | 0 | 0 | Turbid | | | |
| Comparative Example 4 | | 2.1 | 80 | 20 | 0 | 0 | Turbid | | | |
| Comparative Example 5 | | 2.1 | 20 | 0 | 80 | 0 | Turbid | Pattern 4 | Incompatible | |
| Comparative Example 6 | | 2.1 | 40 | 0 | 60 | 0 | Turbid | | | |
| Comparative Example 7 | | 2.1 | 60 | 0 | 40 | 0 | Turbid | | | |
| Comparative Example 8 | | 2.1 | 80 | 0 | 20 | 0 | Turbid | | | |
| Comparative Example 9 | | 2.1 | 20 | 0 | 0 | 80 | Turbid | Pattern 4 | Incompatible | |
| Comparative Example 10 | | 2.1 | 40 | 0 | 0 | 60 | Turbid | | | |
| Comparative Example 11 | | 2.1 | 60 | 0 | 0 | 40 | Turbid | | | |
| Comparative Example 12 | | 2.1 | 80 | 0 | 0 | 20 | Turbid | | | |

(continued)

| Experiment No. | Film composition | | | | | | Appearance of film | Thermal analysis | | Note |
|---|---|---|---|---|---|---|---|---|---|---|
| | Cellulose acetate | | | PVA | | | | Chart pattern | Compatibility determination | |
| | Sample No. | Substitution degree | Ratio | L-0302 Ratio | EG-05 Ratio | NH-17Q Ratio | | | | |
| | | | % | % | % | % | | | | |
| Comparative Example 13 | LL-10 | 1.7 | 20 | 80 | 0 | 0 | Turbid | Pattern 2 | Incompatible | |
| Comparative Example 14 | | 1.7 | 40 | 60 | 0 | 0 | Turbid | | | |
| Comparative Example 15 | | 1.7 | 60 | 40 | 0 | 0 | Turbid | | | |
| Comparative Example 16 | | 1.7 | 80 | 20 | 0 | 0 | Turbid | | | |
| Comparative Example 17 | | 1.7 | 20 | 0 | 80 | 0 | Turbid | Pattern 4 | Incompatible | |
| Comparative Example 18 | | 1.7 | 40 | 0 | 60 | 0 | Turbid | | | |
| Comparative Example 19 | | 1.7 | 60 | 0 | 40 | 0 | Turbid | | | |
| Comparative Example 20 | | 1.7 | 80 | 0 | 20 | 0 | Turbid | | | |
| Comparative Example 21 | | 1.7 | 20 | 0 | 0 | 80 | Turbid | Pattern 4 | Incompatible | |
| Comparative Example 22 | | 1.7 | 40 | 0 | 0 | 60 | Turbid | | | |
| Comparative Example 23 | | 1.7 | 60 | 0 | 0 | 40 | Turbid | | | |
| Comparative Example 24 | | 1.7 | 80 | 0 | 0 | 20 | Turbid | | | |

[Table 5]

Table 5

| Experiment No. | Film composition | | | | | | Appearance of film | Thermal analysis | | Note |
|---|---|---|---|---|---|---|---|---|---|---|
| | Cellulose acetate | | | PVA | | | | Chart pattern | Compatibility determination | |
| | Sample No. | Substitution degree | Ratio | L-0302 | EG-05 | NH-17Q | | | | |
| | | | | Ratio | Ratio | Ratio | | | | |
| | | | % | % | % | % | | | | |
| Comparative Example 25 | WSCA -0.9 | 0.9 | 20 | 80 | 0 | 0 | Turbid | Pattern 2 | Incompatible | |
| Comparative Example 26 | | 0.9 | 40 | 60 | 0 | 0 | Turbid | | | |
| Comparative Example 27 | | 0.9 | 60 | 40 | 0 | 0 | Turbid | | | |
| Comparative Example 28 | | 0.9 | 80 | 20 | 0 | 0 | Turbid | | | |
| Reference Example 3 | WSCA -0.8 | - | - | 100 | 0 | 0 | Transparent | Pattern 2 | Incompatible | Tg:56°C, Tm: not observed |
| Comparative Example 29 | | 0.8 | 20 | 80 | 0 | 0 | Turbid | | | Tg:54°C, Tm: not observed |
| Comparative Example 30 | | 0.8 | 40 | 60 | 0 | 0 | Turbid | | | Tg:57°C, Tm: not observed |
| Comparative Example 31 | | 0.8 | 60 | 40 | 0 | 0 | Turbid | | | Tg:57°C, Tm: not observed |
| Comparative Example 32 | | 0.8 | 80 | 20 | 0 | 0 | Turbid | | | Tg:56°C, Tm: not observed |
| Reference Example 4 | | 0.8 | 100 | 0 | 0 | 0 | Transparent | | | Tg:232°C, Tm: not observed |

(continued)

| Experiment No. | Film composition | | | | | | Appearance of film | Thermal analysis | | Note |
|---|---|---|---|---|---|---|---|---|---|---|
| | Cellulose acetate | | | PVA | | | | Chart pattern | Compatibility determination | |
| | Sample No. | Substitution degree | Ratio | L-0302 | EG-05 | NH-17Q | | | | |
| | | | | Ratio | Ratio | Ratio | | | | |
| | | | % | % | % | % | | | | |
| Comparative Example 33 | WSCA -0.6 | 0.6 | 20 | 80 | 0 | 0 | Turbid | Pattern 2 | Incompatible | |
| Comparative Example 34 | | 0.6 | 40 | 60 | 0 | 0 | Turbid | | | |
| Comparative Example 35 | | 0.6 | 60 | 40 | 0 | 0 | Turbid | | | |
| Comparative Example 36 | | 0.6 | 80 | 20 | 0 | 0 | Turbid | | | |

In Tables 3 to 5, reference symbols represent the following compounds. Note that, Sample Nos. of cellulose acetate correspond to the Sample Nos. shown in Table 1.

L-0302: polyvinyl alcohol (trade name "Gohsenol L-0302", the Nippon Synthetic Chemical Industry Co., Ltd.), a degree of saponification: approximately 43 mol%
EG-05: polyvinyl alcohol (trade name "Gohsenol EG-05", the Nippon Synthetic Chemical Industry Co., Ltd.), a degree of saponification: approximately 90 mol%
NH-17Q: polyvinyl alcohol (trade name "Gohsenol NH-17Q", the Nippon Synthetic Chemical Industry Co., Ltd.), a degree of saponification: approximately 100 mol%
LM-80: cellulose acetate (trade name "LM-80" manufactured by Daicel Corp.), total degree of acetyl substitution: approximately 2.1
LL-10: cellulose acetate (trade name "LL-10" manufactured by Daicel Corp.), total degree of acetyl substitution: approximately 1.7

Example 26 (Preparation of a film of WSCA-1.0/PVA mixed material)

To a cellulose acetate with a low degree of substitution (WSCA-1.0, degree of substitution 1.0)(90 parts by weight) obtained in each of Synthesis Examples, a polyvinyl alcohol (trade name "Gohsenol EG-05PW", manufactured by the Nippon Synthetic Chemical Industry Co., Ltd.) (10 parts) and water (900 parts by weight) were added. The mixture was sufficiently stirred by a stirrer (trade name "Laboratory reactor RE162/P", manufactured by IKA) at 10 rpm. After dissolution of the cellulose acetate with a low degree of substitution was confirmed, stirring was terminated. The aqueous solution obtained was spread on a glass substrate and dried to obtain a film of WSCA-1.0/PVA mixed material (WSCA-1.0/PVA = 9/1, thickness: approximately 100 μm).

Examples 27 to 37

Films of mixed materials were obtained in the same manner as in Example 25 except that compositions of a cellulose acetate with a low degree of substitution and polyvinyl alcohol as shown in Table 6 were used. In Table 6, "parts" represents "parts by weight".

Comparative Example 37 (Preparation of PVA film)

To a polyvinyl alcohol (PVA, Gohsenol EG-05PW, manufactured by Nippon Synthetic Chemical Industry Co., Ltd.) (100 parts), water (900 parts by weight) was added. The mixture was sufficiently stirred by a stirrer (trade name, "Laboratory reactor RE162/P", manufactured by IKA) at 10 rpm. After dissolution was confirmed, stirring was terminated. The aqueous solution obtained was spread on a glass substrate and dried to obtain a PVA film (thickness: approximately 100 μm).

Comparative Example 38 (Preparation of WSCA-0.7 film)

To the cellulose acetate with a low degree of substitution (WSCA-0.7, degree of substitution 0.7)(100 parts by weight) obtained in each of Synthesis Examples, water (900 parts by weight) was added. The mixture was sufficiently stirred by a stirrer (trade name, "Laboratory reactor RE162/P", manufactured by IKA) at 10 rpm. After dissolution of the cellulose acetate with a low degree of substitution was confirmed, stirring was terminated. The aqueous solution obtained was spread on a glass substrate and dried to obtain a WSCA-0.7 film (thickness: approximately 100 μm).

Comparative Example 39 (Preparation of HPC film)

To hydroxypropylcellulose (HPC, trade name "L-HPC", manufactured by Shin-Etsu Chemical Co., Ltd.)(100 parts by weight), water (900 parts by weight) was added. The mixture was sufficiently stirred by a stirrer (trade name, "Laboratory reactor RE162/P", manufactured by IKA) at 10 rpm. After dissolution was confirmed, stirring was terminated. The aqueous solution obtained was spread on a glass substrate and dried to obtain a HPC film (thickness: approximately 100 μm).

Comparative Example 40 (Preparation of HPMC film)

To hydroxypropylmethylcellulose (HPMC, TC-5 manufactured by Shin-Etsu Chemical Co., Ltd.) (100 parts by weight), water (900 parts by weight) was added. The mixture was sufficiently stirred by a stirrer (trade name, "Laboratory

reactor RE162/P", manufactured by IKA) at 10 rpm. After dissolution was confirmed, stirring was terminated. The aqueous solution obtained was spread on a glass substrate and dried to obtain a HPMC film (thickness: approximately 100 um).

The films obtained in Examples 26 to 37 and Comparative Examples 37 to 40 were subjected to the following evaluations. The results are shown in Table 6.

[Evaluation of gas barrier property]

The oxygen permeability of the films obtained in Examples 26 to 37 and Comparative Examples 37 to 40 was measured by use of "OXTRAN2/20" manufactured by MOCON at 40°C and in the condition of 75%RH.

The water vapor permeability of the films was measured based on JIS Z0208 by a cup method at 40°C and in a 75%RH environment.

[Appearance]

The films obtained in Examples 26 to 37 and Comparative Examples 37 to 40 were visually observed and evaluated based on the same criteria as above

[Table 6]

Table 6

| | Film composition | | | | | Oxygen permeability (cc/m$^2$·day·atm) | Water vapor permeability (g/m$^2$·day·atm) | Appearance of film |
|---|---|---|---|---|---|---|---|---|
| | Cellulose acetate | | PVA | HPC | HPMC | | | |
| | Sample No. | Parts | Parts | Parts | Parts | 40°C 75%RH | 40°C 75%RH | |
| Example 26 | WSCA-1.0 | 90 | 10 | 0 | 0 | 8 | 60 | Transparent |
| Example 27 | WSCA-1.0 | 80 | 20 | 0 | 0 | 8 | 60 | Transparent |
| Example 28 | WSCA-0.9 | 90 | 10 | 0 | 0 | 6 | 60 | Transparent |
| Example 29 | WSCA-0.9 | 80 | 20 | 0 | 0 | 6 | 55 | Transparent |
| Example 30 | WSCA-0.8 | 90 | 10 | 0 | 0 | 3 | 60 | Transparent |
| Example 31 | WSCA-0.8 | 80 | 20 | 0 | 0 | 3 | 55 | Transparent |
| Example 32 | WSCA-0.7 | 90 | 10 | 0 | 0 | 3 | 30 | Transparent |
| Example 33 | WSCA-0.7 | 80 | 20 | 0 | 0 | 3 | 35 | Transparent |
| Example 34 | WSCA-0.6 | 90 | 10 | 0 | 0 | 6 | 35 | Transparent |
| Example 35 | WSCA-0.6 | 80 | 20 | 0 | 0 | 6 | 35 | Transparent |
| Example 36 | WSCA-0.5 | 90 | 10 | 0 | 0 | 8 | 40 | Transparent |
| Example 37 | WSCA-0.5 | 80 | 20 | 0 | 0 | 8 | 45 | Transparent |
| Comparative Example 37 | - | 0 | 100 | 0 | 0 | 38 | 60 | Transparent |
| Comparative Example 38 | WSCA-0.7 | 100 | 0 | 0 | 0 | 4 | 120 | Transparent |
| Comparative Example 39 | - | 0 | 0 | 100 | 0 | >200 | 470 | Transparent |
| Comparative Example 40 | - | 0 | 0 | 0 | 100 | >200 | 740 | Transparent |

In Table 6, reference symbols represent the following compounds. Note that, Sample Nos. of cellulose acetate correspond to the Sample Nos. shown in Table 1.

PVA: polyvinyl alcohol (trade name "Gohsenol EG-05PW", the Nippon Synthetic Chemical Industry Co., Ltd.), a degree of saponification: approximately 90 mol%
HPC: hydroxypropylcellulose (trade name "L-HPC", manufactured by Shin-Etsu Chemical Co., Ltd.)
HPMC: hydroxypropylmethylcellulose (trade name "TC-5", manufactured by Shin-Etsu Chemical Co., Ltd.)

Examples 38 to 45, Comparative Example 41

(Pellet preparation)

A predetermined amount of cellulose acetate and an additive were mixed in a Henschel Mixer, transferred to an extruder, melt at a temperature lower by 10°C than a predetermined spinning temperature and extruded as a strand. The strand was cooled, cut into pieces having a length of 3 mm, and dried in a hot air dryer of 80°C for 10 hours to prepare a pellet-like sample. As the additive, the following one was used.
Examples 38 to 45: trade name "BLAUNON PEG-400" (polyethylene glycol, molecular weight 400) manufactured by AOKI OIL INDUSTRIAL Co., Ltd.
Comparative Example 41: trade name "Plaxel 405D" (caprolactone tetraol, molecular weight 500) manufactured by Daicel Corp.

(Measurement of glass transition temperature (Tg) of pellet sample)

Tg of a piece of the pellet-like sample was measured by using DSC-Q2000 (manufactured by TA Instruments). First, the sample was heated from 40°C to 250°C at a rate of 10°C/minute and then cooled to a temperature near room temperature. Thereafter, the sample was heated at a rate of 1°C/minute. From the DSC curve obtained herein, Tg was obtained. The results are shown in Table 7. Note that, in Examples 40 and 41, two Tg are present. The Tg at the high temperature side is considered as Tg of cellulose acetate; whereas Tg at the low temperature side as Tg of a complex (cellulose acetate-additive complex).

(Melt spinning)

In accordance with the method described in Japanese Patent Laid-Open No. 10-317228, individual pellet-like samples were subjected to melt spinning.
In the cylinder of a capillary rheometer (Capirograph 1B, manufactured by TOYO SEIKI SEISAKU-SHO, LTD.), a pellet-like sample was placed, and the temperature of the cylinder was adjusted to a predetermined spinning temperature. The pellet sample was ejected from a capillary having an aperture of 0.3 mm and the filament ejected was passed through an ejector. In this manner, spinning was made at a linear velocity of 3450 m/minute and a draft ratio of 550 to obtain a yarn of 1.9 denier (d). The melting conditions are shown in Table 7.

Evaluation test

(Strength of yarn)

The strength of the yarns obtained in Examples 38 to 45 and Comparative Example 41 was measured in accordance with the method described in JIS L 1013. The results are shown in Table 7.

(Hue of yarn)

The hue of the yarns obtained in Examples 38 to 45 and Comparative Example 41 was visually observed. The results are shown in Table 7.

(Water solubility of yarn)

The yarn ($2 \times 10^{-5}$ g (approximately 10 cm)) obtained in each of Examples 38 to 45 and Comparative Example 41 was mixed with water (100 g) and sufficiently shaken. Thereafter, solubility of the yarn in water was visually observed.

(Evaluation of biodegradability)

Apparatus: Coulometer OM3001, Ohkura Electric Co., Ltd.

Activated sludge: Activated sludge obtained from the Tatara River purification center in Fukuoka prefecture. The sludge was allowed to stand still for one hour and the supernatant obtained (300 ml) was used per culture bottle (activated sludge concentration 360 ppm).

Amount of specimen: 30 mg
Temperature: 25°C

Biochemical oxygen demand (BOD) in the culture bottle was measured by the coulometer (10 days, 20 days, 30 days and 60 days after initiation of the culture). The blank was measured. The BOD value was obtained by subtracting the value of the blank from the value of a sample. The theoretical BOD value of the sample was obtained on the assumption that the chemical composition is completely decomposed. The percentage of a measured value relative to the theoretical BOD value was determined as a degradation rate. The results are shown in Table 7.

[Table 7]

Table 7

| Example | Cellulose acetate | | | | | Additive | | Pellet | Fiber spinning | | Physical properties of yarn | | | | Biodegradability (decomposition rate %) | | | |
|---|---|---|---|---|---|---|---|---|---|---|---|---|---|---|---|---|---|---|
| | Sample No. | Parts by weight | Oxidation deg ree (%) | DS | CDI | Name | Parts by weight | Tg | Temperature | Draft | Fineness | Strength of yarn | Hue of yarn | Water solubility | Day 10 | Day 20 | Day 30 | Day 60 |
| | | | | | | | | DC | DC | - | d | g/d | (Visual observation) | (Visual observation) | | | | |
| Comparative 41 Example | CA-40 | 80 | 40.2 | 1.51 | 2.7 | Plaxel 405D | 20 | 201 | 220 | 550 | 1.9 | 0.92 | Yellow-white | Insoluble | 9 | 46 | 63 | 87 |
| Example 38 | WSCA-70-0.6 | 65 | 20.1 | 0.63 | 1.6 | BLAUNON PEG-400 | 35 | 163 | 185 | 550 | 1.9 | 0.92 | White | Soluble | 69 | 77 | 84 | 92 |
| Example 39 | WSCA-70-0.9 | 65 | 26.3 | 0.87 | 1.4 | BLAUNON PEG-400 | 35 | 147 | 170 | 550 | 1.9 | 0.93 | White | Soluble | 64 | 73 | 79 | 92 |
| Example 40 | WSCA-40-0.7 | 65 | 21.9 | 0.70 | 2.6 | BLAUNON PEG-400 | 35 | 226, 159 | 185 | 550 | 1.9 | 0.68 | White | Soluble | 67 | 75 | 83 | 92 |
| Example 41 | WSCA-40-0.9 | 65 | 26.3 | 0.87 | 2.4 | BLAUNON PEG-400 | 35 | 218, 149 | 170 | 550 | 1.9 | 0.69 | White | Soluble | 61 | 72 | 77 | 91 |
| Example 42 | WSCA-70-0.9 | 80 | 26.3 | 0.87 | 1.4 | BLAUNON PEG-400 | 20 | 175 | 198 | 550 | 1.9 | 0.88 | White | Soluble | 65 | 73 | 79 | 92 |
| Example 43 | WSCA-70-0.9 | 90 | 26.3 | 0.87 | 1.4 | BLAUNON PEG-400 | 10 | 201 | 220 | 550 | 1.9 | 0.61 | Yellow-white | Soluble | 66 | 74 | 80 | 91 |
| Example 44 | WSCA-70-0.9 | 95 | 26.3 | 0.87 | 1.4 | BLAUNON PEG-400 | 5 | 211 | 235 | 550 | 1.9 | 0.49 | Yellow to brown | Soluble | 62 | 72 | 78 | 92 |
| Example 45 | WSCA-70-0.9 | 50 | 26.3 | 0.87 | 1.4 | BLAUNON PEG-400 | 50 | 118 | 145 | 550 | 1.9 | 0.81 | White | Soluble | 60 | 69 | 76 | 90 |

Note that, Sample Nos. of cellulose acetate correspond to the Sample Nos. shown in Table 2 and cellulose acetates obtained in Synthesis Example 14.

Industrial Applicability

According to the water-soluble cellulose acetate resin composition of the present invention, components are compatible with each other to form a transparent resin composition. A film containing the resin composition has low oxygen permeability and water vapor permeability and excellent function of protecting an active ingredient from oxidation and humidity. Accordingly, the water-soluble cellulose acetate resin composition of the present invention is useful as e.g., a base of the coating layer of a coated preparation.

According to the water-soluble cellulose acetate resin composition of the present invention, a water-soluble and biodegradable cellulose acetate resin molded article can be produced in a molten state. Accordingly, the water-soluble cellulose acetate resin composition of the present invention is also useful as materials for e.g., a tobacco filter, nonwoven fabric and various injection molded articles.

Reference Signs List

↓ Glass transition point of polymer A, polymer B, or a polymer blend of these
* Melting point (endothermic peak) of polymer B

## Claims

1. A water-soluble cellulose acetate resin composition comprising cellulose acetate (A1) having a total degree of acetyl substitution of 0.4 to 1.6 and polyvinyl alcohol (B) having a degree of saponification of not less than 50 mol%.

2. The water-soluble cellulose acetate resin composition according to claim 1, wherein the total degree of acetyl substitution of cellulose acetate (A1) is 0.6 to 0.9.

3. The water-soluble cellulose acetate resin composition according to claim 1 or 2, wherein the degree of saponification of polyvinyl alcohol (B) is not less than 90 mol%.

4. The water-soluble cellulose acetate resin composition according to any one of claims 1 to 3, wherein the ratio of polyvinyl alcohol (B) with respect to 100 parts by weight of cellulose acetate (A1) is not more than 500 parts by weight.

5. The water-soluble cellulose acetate resin composition according to any one of claims 1 to 4, wherein the cellulose acetate (A1) is a cellulose acetate having a compositional distribution index (CDI) defined below of not more than 2.0

   CDI = (Measured value of the half height width of chemical composition) / (Theoretical value of the half height width of chemical composition),
   Measured value of the half height width of chemical composition: the half height width of chemical composition determined by the HPLC analysis of cellulose acetate propionate obtained by propionylating all residual hydroxy groups in cellulose acetate (sample),

   $$\text{Theoretical value of the half height width of compositional distribution} = 2.35482\sqrt{3*DPw*(DS/3)*(1-DS/3)}/DPw$$

   DS: the total degree of acetyl substitution, and
   DPw: the weight-average degree of polymerization (value determined by the GPC-light scattering method using cellulose acetate propionate obtained by propionylating all residual hydroxy groups in cellulose acetate (sample)).

6. A water-soluble cellulose acetate composite molded article formed from the water-soluble cellulose acetate resin composition according to any one of claims 1 to 5.

7. The water-soluble cellulose acetate composite molded article according to claim 6, being like a film.

8. The water-soluble cellulose acetate composite molded article according to claim 6, being like a fiber.

9. A coated preparation having a coating layer containing the water-soluble cellulose acetate resin composition according to any one of claims 1 to 5.

10. A method for producing a water-soluble cellulose acetate composite molded article, comprising molding the water-soluble cellulose acetate resin composition according to any one of claims 1 to 5 via a molten state.

11. A method for producing a water-soluble cellulose acetate composite molded article, comprising molding the water-soluble cellulose acetate resin composition according to any one of claims 1 to 5 via a solution state.

12. The method according to claim 11, wherein the water-soluble cellulose acetate composite molded article is a coating layer of a coated preparation.

**Patentansprüche**

1. Wasserlösliche Celluloseacetatharz-Zusammensetzung, umfassend Celluloseacetat (A1) mit einem Gesamtgrad an Acetylsubstitution von 0,4 bis 1,6 und Polyvinylalkohol (B) mit einem Verseifungsgrad von nicht weniger als 50 Mol-%.

2. Wasserlösliche Celluloseacetatharz-Zusammensetzung nach Anspruch 1, wobei der Gesamtgrad an Acetylsubstitution von Celluloseacetat (A1) 0,6 bis 0,9 beträgt.

3. Wasserlösliche Celluloseacetatharz-Zusammensetzung nach Anspruch 1 oder 2, wobei der Verseifungsgrad von Polyvinylalkohol (B) nicht weniger als 90 Mol-% beträgt.

4. Wasserlösliche Celluloseacetatharz-Zusammensetzung nach einem der Ansprüche 1 bis 3, wobei das Verhältnis von Polyvinylalkohol (B) zu 100 Gewichtsteilen Celluloseacetat (A1) nicht mehr als 500 Gewichtsteile beträgt.

5. Wasserlösliche Celluloseacetatharz-Zusammensetzung nach einem der Ansprüche 1 bis 4, wobei das Celluloseacetat (A1) ein Celluloseacetat mit einem nachstehend definierten Zusammensetzungsverteilungsindex (CDI) von nicht mehr als 2,0 ist

CDI = (Gemessener Wert der Halbwertsbreite der chemischen Zusammensetzung) / (Theoretischer Wert der Halbwertsbreite der chemischen Zusammensetzung),
Gemessener Wert der Halbwertsbreite der chemischen Zusammensetzung: die Halbwertsbreite der chemischen Zusammensetzung, bestimmt durch die HPLC-Analyse von Celluloseacetatpropionat, das durch Propionylierung aller restlichen Hydroxygruppen im Celluloseacetat (Probe) erhalten wurde,

$$\text{Theoretischer Wert der Halbwertsbreite der Zusammensetzungsverteilung} = 2{,}35482\sqrt{3 * \mathrm{DPw} * (\mathrm{DS}/3) * (1 - \mathrm{DS}/3)}\ /\mathrm{DPw}$$

DS: der Gesamtgrad an Acetylsubstitution, und
DPw: der gewichtsmittlere Polymerisationsgrad (Wert, bestimmt durch das GPC-Lichtstreuungsverfahren unter Verwendung von Celluloseacetatpropionat, das durch Propionylierung aller restlichen Hydroxygruppen im Celluloseacetat (Probe) erhalten wurde).

6. Wasserlöslicher Celluloseacetat-Verbundformkörper, gebildet aus der wasserlöslichen Celluloseacetatharz-Zusammensetzung nach einem der Ansprüche 1 bis 5.

7. Wasserlöslicher Celluloseacetat-Verbundformkörper nach Anspruch 6, der die Form eines Films hat.

8. Wasserlöslicher Celluloseacetat-Verbundformkörper nach Anspruch 6, der die Form einer Faser hat.

9. Beschichtete Zubereitung mit einer Überzugsschicht, die die wasserlösliche Celluloseacetatharz-Zusammensetzung nach einem der Ansprüche 1 bis 5 enthält.

10. Verfahren zur Herstellung eines wasserlöslichen Celluloseacetat-Verbundformkörpers, umfassend das Formen der wasserlöslichen Celluloseacetat-Harzzusammensetzung nach einem der Ansprüche 1 bis 5 in geschmolzenem Zustand.

11. Verfahren zur Herstellung eines wasserlöslichen Celluloseacetat-Verbundformkörpers, umfassend das Formen der wasserlöslichen Celluloseacetatharz-Zusammensetzung nach einem der Ansprüche 1 bis 5 in einem Lösungszustand.

12. Verfahren nach Anspruch 11, wobei der wasserlösliche Celluloseacetat-Verbundformkörper eine Überzugsschicht einer beschichteten Zubereitung ist.

**Revendications**

1. Composition de résine d'acétate de cellulose hydrosoluble comprenant de l'acétate de cellulose (A1) ayant un degré total de substitution acétylique de 0,4 à 1,6 et un alcool polyvinylique (B) ayant un degré de saponification non inférieur à 50 % en moles.

2. Composition de résine d'acétate de cellulose hydrosoluble selon la revendication 1, dans laquelle le degré total de substitution acétylique de l'acétate de cellulose (A1) va de 0,6 à 0,9.

3. Composition de résine d'acétate de cellulose hydrosoluble selon la revendication 1 ou 2, dans laquelle le degré de saponification de l'alcool polyvinylique (B) n'est pas inférieur à 90 % en moles.

4. Composition de résine d'acétate de cellulose hydrosoluble selon l'une quelconque des revendications 1 à 3, dans laquelle le rapport d'alcool polyvinylique (B) par rapport à 100 parties en poids d'acétate de cellulose (A1) n'est pas supérieur à 500 parties en poids.

5. Composition de résine d'acétate de cellulose hydrosoluble selon l'une quelconque des revendications 1 à 3, dans laquelle l'acétate de cellulose (A1) est un acétate de cellulose ayant un indice de distribution compositionnelle (CDI) défini ci-dessous non supérieur à 2,0

CDI = (valeur mesurée de la largeur à mi-hauteur de la composition chimique)/(valeur théorique de la largeur à mi-hauteur de la composition chimique),
valeur mesurée de la largeur à mi-hauteur de la composition chimique : largeur à mi-hauteur de la composition chimique déterminée par l'analyse HPLC d'un propionate d'acétate de cellulose obtenu par propionylation de tous les groupes hydroxy résiduels dans l'acétate de cellulose (échantillon),

valeur théorique de la largeur à mi-hauteur de la distribution compositionnelle

$$= 2,35482\sqrt{3 * DPw * (DS/3) * (1 - DS/3)} / DPw$$

DS : degré total de substitution acétylique, et
DPw : degré de polymérisation moyen en poids (valeur déterminée par la méthode de GPC avec diffusion de lumière en utilisant du propionate d'acétate de cellulose obtenu par propionylation de tous les groupes hydroxy résiduels dans l'acétate de cellulose (échantillon)).

6. Article moulé composite en acétate de cellulose hydrosoluble formé à partir de la composition de résine d'acétate de cellulose hydrosoluble selon l'une quelconque des revendications 1 à 5.

7. Article moulé composite en acétate de cellulose hydrosoluble selon la revendication 6, se présentant comme un film.

8. Article moulé composite en acétate de cellulose hydrosoluble selon la revendication 6, se présentant comme une fibre.

9. Préparation revêtue ayant une couche de revêtement contenant la composition de résine d'acétate de cellulose hydrosoluble selon l'une quelconque des revendications 1 à 5.

10. Procédé de production d'article moulé composite en acétate de cellulose hydrosoluble, comprenant le moulage de la composition de résine d'acétate de cellulose hydrosoluble selon l'une quelconque des revendications 1 à 5 en passant par un état fondu.

11. Procédé de production d'article moulé composite en acétate de cellulose hydrosoluble, comprenant le moulage de la composition de résine d'acétate de cellulose hydrosoluble selon l'une quelconque des revendications 1 à 5 en passant par un état en solution.

12. Procédé selon la revendication 11, dans lequel l'article moulé composite en acétate de cellulose hydrosoluble est une couche de revêtement d'une préparation revêtue.

[Figure 1]

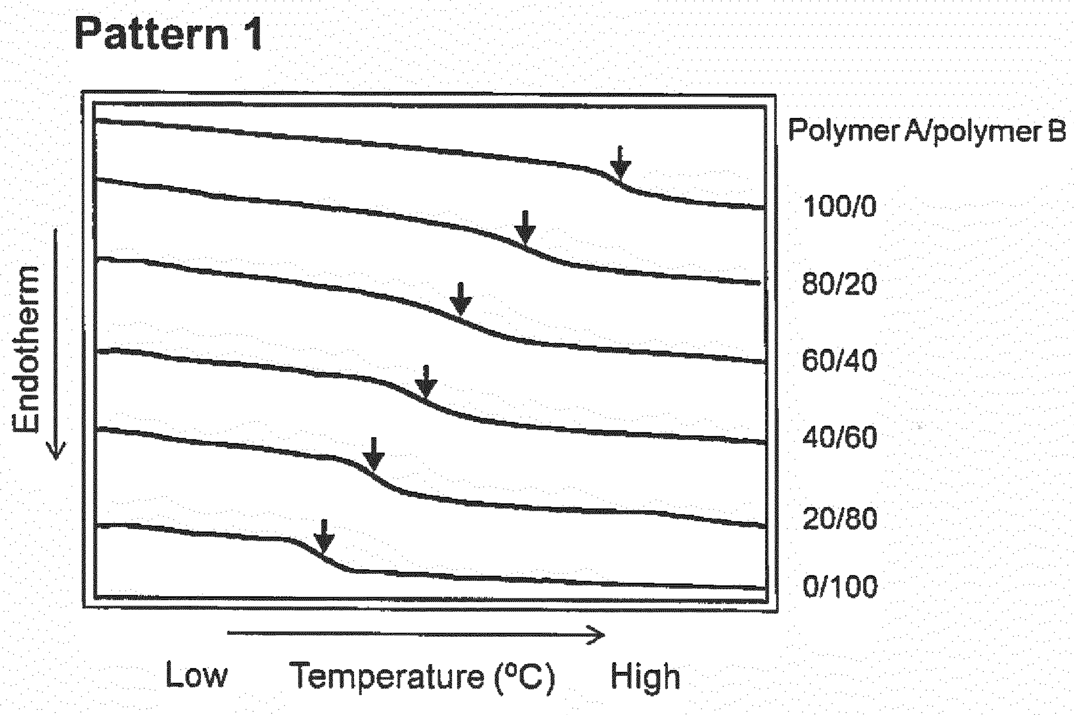


[Figure 2]

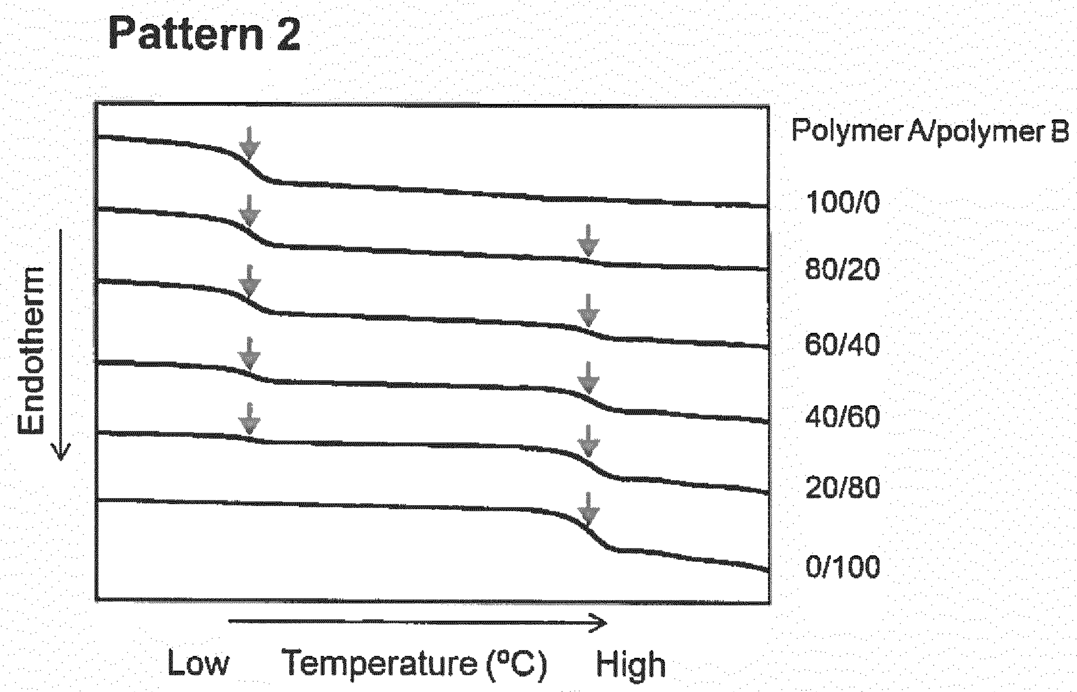

[Figure 3]

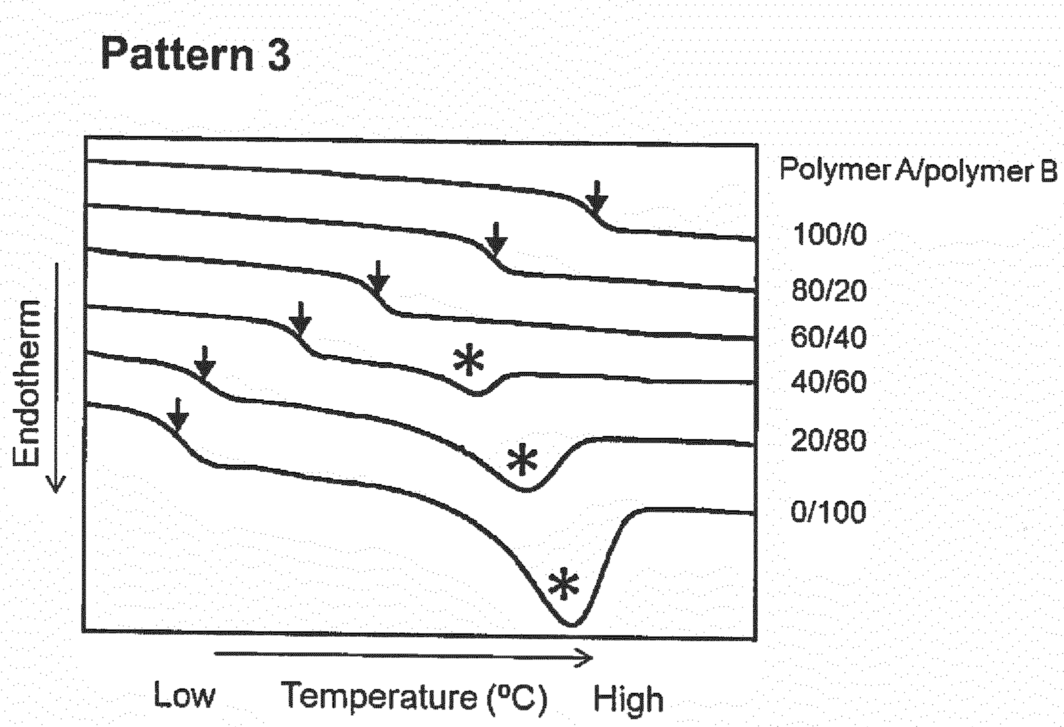


[Figure 4]

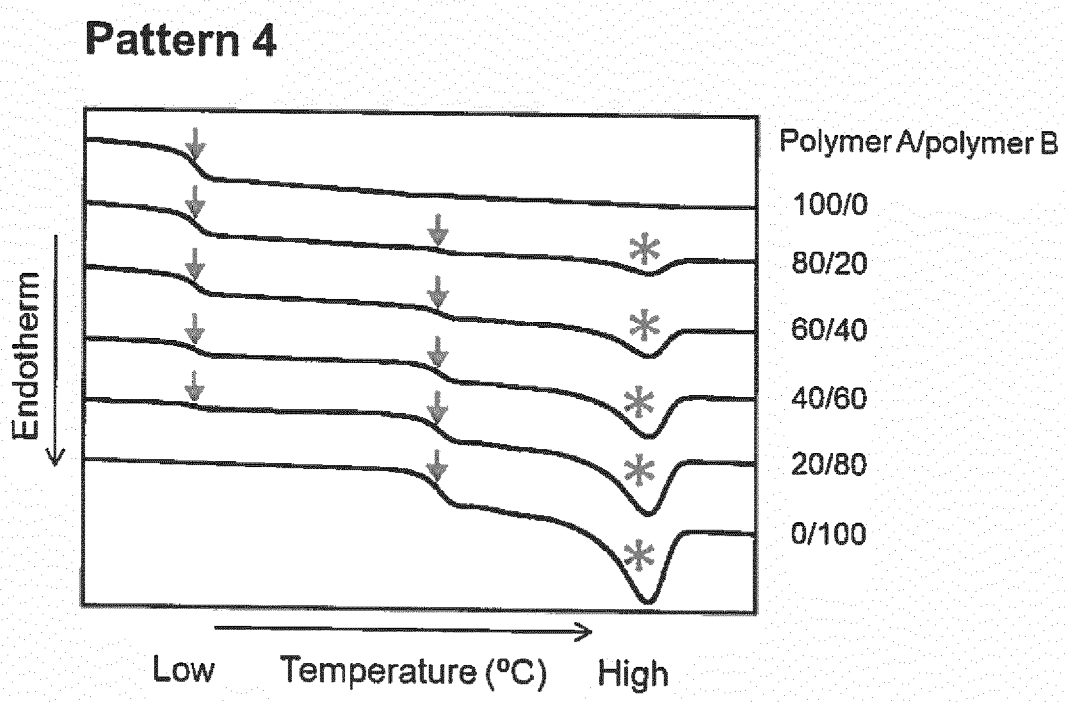

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5206030 A
- JP 10317228 A
- JP 7268724 A
- JP 1013481 A
- JP 2001064440 A
- WO 2014142166 A1
- JP 2011132448 A
- JP 2014520945 A
- JP 2003201301 A
- JP 2011158664 A


### Non-patent literature cited in the description


- *Journal of the Society of Fiber Science and Technology, Japan,* 1986, vol. 42, 25
- **CIBMENT, L. ; RIVIBRE, C.** *Bull. SOC. chim.,* 1934, vol. 1 (5), 1075
- **SOOKNE, A. M. ; RUTHERFORD, H. A. ; MARK, H. ; HARRIS, M. J.** *Research Natl. Bur. Standards,* 1942, vol. 29, 123
- **A. J. ROSENTHAL ; B. B. WHITE.** *Ind. Eng. Chem.,* 1952, vol. 44 (11), 2693-2696
- **TEZUKA.** *Carbonydr. Res.,* 1995, vol. 273, 83
- **TEZUKA.** *Carbohydr. Res.,* 1995, vol. 273, 83